# EUROPEAN PATENT APPLICATION

(11) **EP 1 564 933 A1**
(43) Date of publication of application: **17.08.2005**
(21) Application number: 05001571.8
(22) Date of filing: 26.01.2005
(51) Int. Cl.: H04L 12/437, H04Q 11/00

(54) **Flexible upgrade of an open ring optical network**

(30) Priority: 10.02.2004 US 775929
(71) Applicant: FUJITSU LIMITED, Kawasaki-shi, Kanagawa 211-8588 (JP)
(72) Inventor: Takeguchi, Koji, Kawasaki, 213-0011 (JP); Gumaste, Ashwin Anil, Dallas, Texas 75252 (US); Kinoshita, Susumu, Fuchu-shi, Tokyo 183-0032 (JP)
(74) Representative: HOFFMANN - EITLE

(57) **Abstract**

In one embodiment, a method is provided for an in-service upgrade of a twin ring optical network comprising a plurality of passive add/drop nodes coupled using a first optical fiber ring and a second optical fiber ring. The method includes interrupting optical traffic travelling in a first direction on the first optical fiber ring at a first interruption location between a first passive add/drop node and a second passive add/drop node. The method further includes interrupting optical traffic travelling in a second disparate direction on the second optical fiber ring at a second interruption location between the first add/drop node and the second add/drop node. The network provides protection switching such that interrupting traffic flow at the first or second interruption locations does not prevent traffic on the network from reaching any add/drop node. The method also includes inserting an optical gateway node into the network.

## Description

### TECHNICAL FIELD OF THE INVENTION

The present invention relates generally to optical transport systems, and more particularly to an upgraded flexible open ring optical network and method.

### BACKGROUND OF THE INVENTION

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth, or size of the channels. Arrayed waveguide gratings (AWGs), interleavers, and/or fiber gratings (FGs) are typically used to add and/or drop traffic at the multiplex and demultiplex network add/drop nodes (ADNs).

The topology in which WDM and DWDM networks are built plays a key role in determining the extent to which such networks are utilized. Ring topologies are common in today's networks. WDM add/drop units serve as network elements on the periphery of such optical rings. By using WDM add/drop equipment that each network element, the entire composite signal can be fully demultiplexed into its constituent channels and switched (added/dropped or passed through).

### SUMMARY OF THE INVENTION

In one embodiment, a method is provided for an in-service upgrade of a twin ring optical network including a plurality of passive add/drop nodes coupled using a first optical fiber ring and a second optical fiber ring. The method includes interrupting optical traffic travelling in a first direction on the first optical fiber ring at a first interruption location between a first passive add/drop node and a second passive add/drop node. The add/drop nodes are coupled to the optical rings and operable to passively add and drop traffic to and from the optical rings. The method also includes interrupting optical traffic travelling in a second disparate direction on the second optical fiber ring at a second interruption location between the first add/drop node and the second add/drop node. The first and second interruption locations are located proximate to one another. The network provides protection switching such that interrupting traffic flow at the first or second interruption locations does not prevent traffic on the network from reaching any add/drop node.

The method further includes inserting an optical gateway node into the network. The gateway node includes a first transport element associated with the first fiber ring and a second transport element associated with the second fiber ring. Each transport element includes a demultiplexer operable to demultiplex ingress traffic into a plurality of constituent wavelengths, a switch operable to selectively forward or terminate each wavelength, and a multiplexer operable to multiplex the forwarded wavelengths. The gateway node is inserted into the optical ring network such that the first transport element is inserted at the first interruption location and the second transport element is inserted at the second interruption location.

In another embodiment, a method is provided for an in-service upgrade of a twin ring optical network comprising a plurality of passive add/drop nodes coupled using a first optical fiber ring and a second optical fiber ring. The method includes interrupting optical traffic travelling in a first direction on the first optical fiber ring at a first interruption location between a first passive add/drop node and a second passive add/drop node. The add/drop nodes are coupled to the optical rings and operable to passively add and drop traffic to and from the optical rings. The method also includes interrupting optical traffic travelling in a second disparate direction on the second optical fiber ring at a second interruption location between the first add/drop node and the second add/drop node. The first and second interruption locations are proximate to one another. The network provides protection switching such that interrupting traffic flow at the first or second interruption locations does not prevent traffic on the network from reaching any add/drop node. The method further includes inserting an optical gateway node into the network. The gateway node includes a first transport element associated with the first fiber ring, a second transport element associated with the second fiber ring, a first optical coupler operable to receive ingress traffic on the optical ring and to forward a first and a second copy of the ingress traffic, and a multiplexer/demultiplexer unit operable to receive the first copy of the ingress traffic from the first optical coupler. The multiplexer/demultiplexer unit includes a demultiplexer operable to demultiplex the first copy of the ingress traffic into a plurality of constituent wavelengths, a switch operable to selectively forward or terminate each wavelength, and a multiplexer operable to multiplex the forwarded wavelengths.

The gateway node also includes a signal regeneration element operable to receive the second copy of the ingress traffic from the first optical coupler and to selectively regenerate a signal in one or more constituent wavelengths of the ingress traffic and a second optical coupler. The second optical coupler is operable to receive the regenerated signals in one or more wavelengths, receive the multiplexed forwarded wavelengths from the multiplexer, and combine the multiplexed forwarded wavelengths with the regenerated wavelengths received from the signal regeneration element such that the combined signal is forwarded on the optical ring. The gateway node is inserted into the optical ring network such that the first transport element is inserted at the first interruption location and the second transport element is inserted at the second interruption location.

In yet another embodiment, a method is provided for an in-service upgrade of a twin ring optical network comprising a plurality of passive add/drop nodes coupled using a first optical fiber ring and a second optical fiber ring. The method includes interrupting traffic flow on the first optical fiber ring at a first interruption location between a first passive add/drop node and a second passive add/drop node. The add drop nodes are coupled to the optical rings and operable to passively add and drop traffic to and from the optical rings. The method further includes interrupting traffic flow on the second optical fiber ring at a second interruption location between the first add/drop node and the second add/drop node. The first and second interruption locations are proximate to one another. The network provides protection switching such that interrupting traffic flow at the first or second interruption locations does not prevent traffic on the network from reaching any add/drop node. The method also includes inserting an optical gateway node into the network. The gateway node includes a first transport element associated with the first fiber ring and a second transport element associated with the second fiber ring. The gateway is inserted into the optical ring network such that the first transport element is inserted at the first interruption location and the second transport element is inserted at the second interruption location.

Technical advantages of the present invention include providing a method for upgrading a twin ring optical network where the network provides protection switching such that interrupting traffic flow during the upgrade procedure does not prevent traffic on the network from reaching any add/drop node in the network. This is referred to as an "in-service" upgrade.

Another technical advantage of the present invention includes providing a method for an in-service upgrade of a twin ring optical network that allows for a lower cost network to be procured initially while allowing the flexibility to upgrade the network in the future without disrupting the existing traffic flow in the network during the upgrade procedure.

Other technical advantages of the present invention will be readily apparent to one skilled in the art from the following figures, description, and claims.

### BRIEF DESCRIPTION OF THE DRAWINGS

For a more complete understanding of the present invention and its advantages, reference is now made to the following description taken in conjunction with the accompanying drawings, wherein like numerals represent like parts, in which:
FIGURE 1 is a block diagram illustrating an example optical network;
FIGURE 2 is a block diagram illustrating details of an add/drop node (ADN) of the optical network of FIGURE 1;
FIGURE 3 illustrates an optical network with high-level details of the ADN of FIGURE 2;
FIGURE 4 is a flow diagram illustrating protection switching and lightpath protection for the network of FIGURE 1 having the ADNs of FIGURE 2;
FIGURE 5 is a block diagram illustrating another example optical network;
FIGURE 6 is a block diagram illustrating details of an optical wavelength reuse gateway of the optical network of FIGURE 5;
FIGURES 7A and 7B are block diagrams illustrating elements of the gateway of the optical network of FIGURE 5;
FIGURE 8 is a flow diagram illustrating lightpaths of optical signals of the optical network of FIGURE 5;
FIGURE 9 is a flow diagram illustrating protection switching and lightpath protection of the working lightpath of FIGURE 8;
FIGURE 10 is a block diagram illustrating another example optical network;
FIGURE 11 is a block diagram illustrating details of another example ADN of the optical network of FIGURE 10;
FIGURE 12 is a block diagram illustrating an optical network including the ADNs of FIGURE 11 and the gateways of FIGURE 6;
FIGURE 13 is a block diagram illustrating lightpaths of optical signals of the optical network of FIGURE 12;
FIGURE 14 is a block diagram illustrating protection switching and lightpath protection in the optical network of FIGURE 12;
FIGURE 15 is a block diagram illustrating details of an another example ADN;
FIGURE 16 is a block diagram illustrating details of an another example optical network gateway;
FIGURE 17 is a block diagram illustrating an optical network incorporating the ADNs of FIGURE 15 and the gateway of FIGURE 16;
FIGURE 18 is a block diagram illustrating example lightpaths of optical signals of the optical network of FIGURE 17;
FIGURE 19 is a block diagram illustrating example protection switching and lightpath protection in the optical network of FIGURE 17;
FIGURE 20 is a block diagram illustrating another example of lightpaths of optical signals of the optical network of FIGURE 17; and
FIGURE 21 is a block diagram illustrating another example of lightpaths of optical signals of the optical network of FIGURE 17.

### DETAILED DESCRIPTION OF THE INVENTION

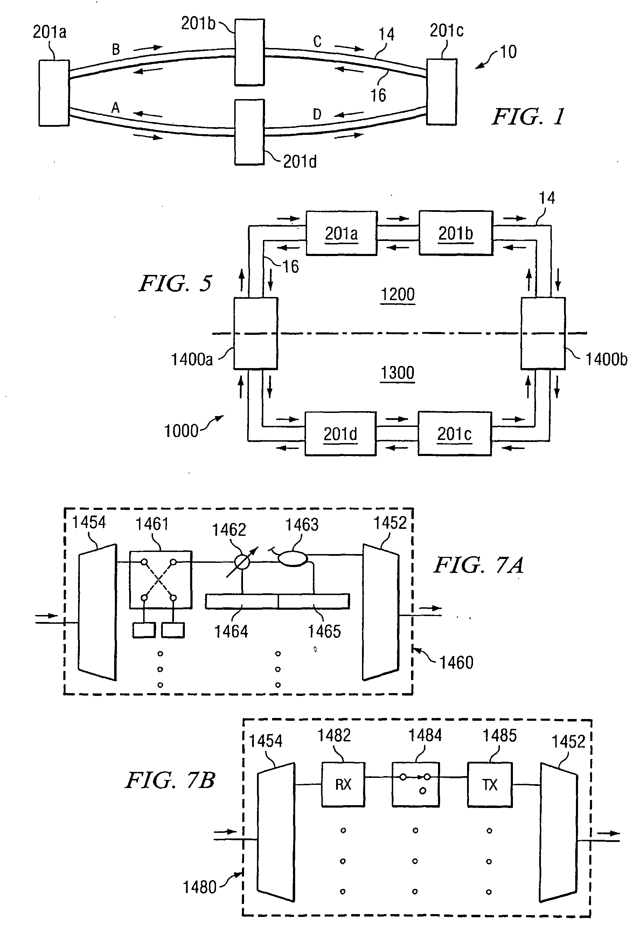

FIGURE 1 illustrates an example optical network 10. In this embodiment, the network 10 is an optical network in which a number of optical channels are carried over a common path at disparate wavelengths. The network 10 may be a wavelength division multiplexing (WDM), dense wavelength division multiplexing (DWDM), or other suitable multi-channel network. The network 10 may be used in a short-haul metropolitan network, and long-haul inter-city network or any other suitable network or combination of networks.

Referring to FIGURE 1, the network 10 includes a plurality of add/drop nodes (ADNs) 201, a first fiber optic ring 14, and a second fiber optic ring 16. Optical information signals are transmitted in different directions on the rings 14 and 16 to provide fault tolerance. Thus each ADN both transmits traffic to and receives traffic from each neighboring ADN. As used herein, the term "each" means every one of at least a subset of the identified items. The optical signals have at least one characteristic modulated to encode audio, video, textual, real-time, non-real-time and/or other suitable data. Modulation may be based on phase shift keying (PSK), intensity modulation (IM) and other suitable methodologies.

In the illustrated embodiment, the first ring 14 is a clockwise ring in which traffic is injected in a clockwise direction. The second ring 16 is a counterclockwise ring in which traffic is injected in a counterclockwise direction. Adjacent ADNs are coupled using a length of fiber referred to as a "span." Span A comprises the portion of the clockwise ring 14 and counterclockwise ring 16 between ADN 201 d and ADN 201a. Span B comprises the portion of the clockwise ring 14 and the counterclockwise ring 16 between ADN 201a and ADN 201b. Span C comprises the portion of the clockwise ring 14 and the counterclockwise ring 16 between ADNs 201b and 201c. Span D comprises the portion of the clockwise ring 14 and the counterclockwise ring 16 between ADN 201c and ADN 201d.

The ADNs 201 are operable to add and drop traffic to and from the rings 14 and 16. At each ADN 201, traffic received from local clients is added to the rings 14 and 16 while traffic destined for local clients is dropped. Traffic may be added to the rings 14 and 16 by inserting the traffic channels or otherwise combining signals of the channels into a transport signal of which at least a portion is transmitted on one or both rings 14 and 16. Traffic may be dropped from the rings 14 and 16 by making the traffic available for transmission to the local clients. Thus, traffic may be dropped and yet continue to circulate on a ring 14 and 16. In a particular embodiment, traffic is passively added to and dropped from the rings 14 and 16. ["Passive" in this context means the adding or dropping of channels without power, electricity, and/or moving parts. An "active device" would thus use power/electricity or moving parts to perform work.] In a particular embodiment, traffic may be passively added to and/or dropped from the ring 14 and 16 by splitting/combining, which is without multiplexing/demultiplexing, in the transport rings and/or separating parts of a signal in the ring.

In one embodiment, the ADNs 201 are further operable to multiplex data from clients for adding to the rings 14 and 16 and to demultiplex channels of data from the rings 14 and 16 for clients. In this embodiment, the ADNs 12 may also perform optical to electrical conversion of the signals received from and sent to the clients.

In addition, as described in more detail below, rings 14 and 16 each have termini in one of the ADNs 201, such that the rings 14 and 16 are "open" rings. That is, the rings 14 and 16 do not form a continuous transmission path around network 10 such that traffic does not continue and/or include an obstruction on a ring past a full circuit of the network 10. The opening in the rings 14 and 16 terminates, and thus removes channels at the terminal points. Thus, after traffic of a channel is transmitted to each ADN 201 in the clockwise and/or counterclockwise rings 14 and 16 by the combined ADNs 201, the traffic is removed from the rings 14 and 16. This prevents interference of each channel with itself.

In a particular embodiment and as described further below, signal information such as wavelengths, power and quality parameters are monitored in the ADNs 201 and/or by a control system element. Based on this information, the network 10 is able to broadcast real-time information regarding ring cuts and other faults and is able to perform protection switching. Thus, the ADNs 201 provide for circuit protection in the event of a ring cut in one or both of the rings 14 and 16.

Total wavelength of the network 10 may be divided and assigned to each ADN 201 depending on the local or other traffic of the ADNs 201. For an embodiment in which the total lambda is forty and total number of ADNs 201 is four and the ADN traffic is even in each ADN 201, then ten lambda may be assigned to each ADN 201. If each lambda is modulated by 10Gb/s data-rate, each note can send 100Gb/s (10Gb/s x 10 lambda) to all ADNs in the network 10. In addition, channel spacing is flexible in the rings 14 and 16 and the ADN elements on the rings 14 and 16 need not be configured with channel spacing. Instead, for example, channel spacing may be set up by add/drop receivers and transmitters that communicate with and/or are coupled to the clients. The rings 14 and 16 add, drop and communicate traffic independently of and/or regardless of the channel spacing of the traffic.

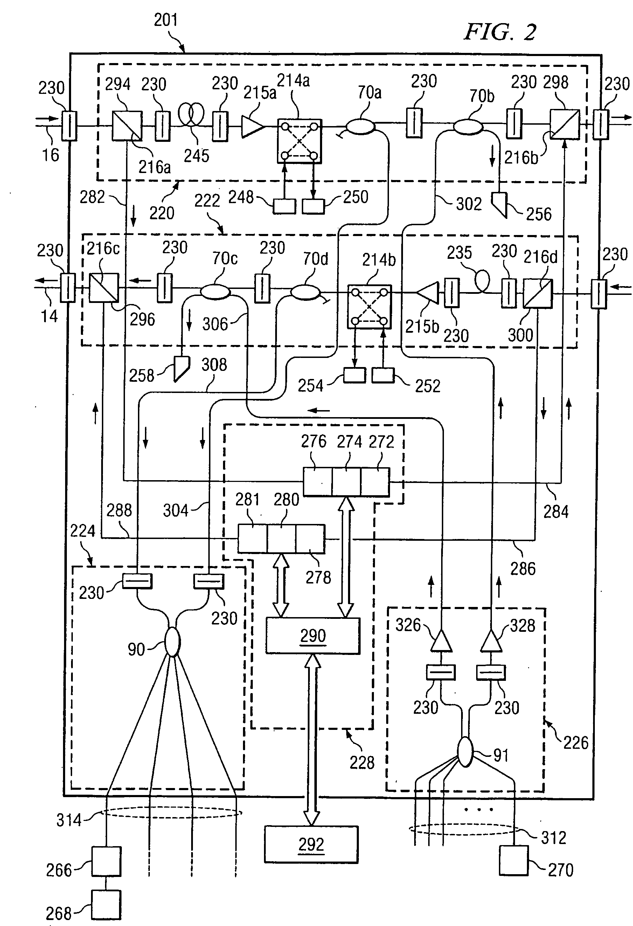

FIGURE 2 illustrates details of an ADN 201. A network having ADN 201 may be an Optical-Shared-Path-Protection-Ring (OSPPR) network in which one ring of the network may be used as a back-up communication or protection path in the event that a communication on the other ring is interrupted. A network having ADN 201 may also be an Optical-Uni-Directional Path-Switched-Ring (OUPSR) network in which traffic sent from a first ADN 201 to a second ADN 201 is communicated to the second ADN 201 over both rings of the network. In the present embodiment, optical supervisory/service channel (OSC) traffic is transmitted in an external band separate from the revenue-generating traffic (actual voice traffic). In a particular embodiment, the OSC signal is transmitted at a wavelength of 1510 nanometers (nm). Transport elements 220 and 222 each passively add and drop traffic to and from without multiplexing or demultiplexing the signals on the rings and/or provide other interaction of the ADNs 201 with the rings 14 and 16 using optical couplers or other suitable optical splitters. An optical coupler is any device operable to combine or otherwise passively generate a combined optical signal based on two or more optical signals without multiplexing and/or to split or divide an optical signal into discrete optical signals or otherwise passively generate discrete optical signals based on the optical signal without demultiplexing. The discrete signals may be similar or identical in form and/or content. For example, the discrete signals may be identical in content and identical or substantially similar in energy, may be identical in content and differ substantially in energy, or may differ slightly or otherwise in content.

ADN 201 comprises counterclockwise transport element 220, clockwise transport element 222, distributing element 224, combining element 226, and managing element 228. In one embodiment, the elements 220, 222, 224, 226 and 228 as well as components within the elements may be interconnected with optical fiber links. In other embodiments, the components may be implemented in part or otherwise with planar waveguide circuits and/or free space optics. In addition, the elements of ADN 201 may each be implemented as one or more discrete cards within a card shelf of the ADN 201. In addition, functionality of an element itself may be distributed across a plurality of discrete cards. In this way, ADN 201 is modular, upgradeable, and provides a pay-as-you-grow architecture. Connectors 230 allow efficient and cost effective replacement of failed components. It will be understood that additional, different and/or other connectors may be provided as part of the ADN 201.

Transport elements 220 and 222 may each comprise passive couplers or other suitable optical splitters 70, ring switches 214, optical amplifier 215, and OSC filters 216. Optical splitters 70 may comprise splitters 70 or other suitable passive device. In one embodiment, optical coupler 70 is a fiber coupler with two inputs and two outputs. Optical coupler 70 may, in other embodiments, be combined in whole or part with a wave guide circuit and/or free space optics. It will be understood that coupler 70 may include one or any number of any suitable inputs and outputs and that the coupler 70 may comprise a greater number of inputs than outputs or a greater number of outputs than inputs. Ring switches 214 may be 2x2 or other switches operable to selectively open the connected ring 14 or 16. In the 2x2 embodiment, switches 214 include a "cross" or open position and a "through" or closed position. The cross position may allow for loopback, localized and other signal testing. The open position allows the ring openings in the ADNs 201 to be selectively reconfigured to provide protection switching.

Amplifiers 215 may comprise an Erbium-doped fiber amplifier (EDFA) or other suitable amplifier. In one embodiment, the amplifier is a preamplifier and may be selectively deactivated to open a connected ring 14 or 16 to provide protection switching in the event of failure of the adjacent switch 214. Because the span loss of clockwise ring 14 usually differs from the span loss of counterclockwise ring 16, the amplifiers 215 may use an ALC function with wide input dynamic-range. Hence, the amplifiers 215 may deploy AGC to realize gain-flatness against input power variation as well as ALC by internal variable optical attenuators (VOAs). The preamplifiers 215 and the switches 214 are disposed in the transport elements 220 and 222 inside of the OSC filters 216 and between the ingress OSC filters 216 and the add/drop couplers 70. Thus, the OSC signal may be recovered regardless of the position of switches 214 or operation of preamplifiers 215. OSC filters 216 may comprise thin film type, fiber grating or other suitable type filters.

In the specific embodiment of FIGURE 2, counterclockwise transport element 220 includes a passive optical splitter set having a counterclockwise drop coupler 70a and a counterclockwise add coupler 70b. The counterclockwise transport element 220 further includes OSC filter 294 at the ingress and OSC filer 298 at the egress edges, counterclockwise amplifier 215a between the ingress OSC filter 294 and drop coupler 70a and counterclockwise ring protection switch 214a between amplifier 215a and drop coupler 70a. Thus, the switch 214a in this embodiment is on the ingress side of the transport element and/or drop coupler. Ring protection switches 214 are two position or other suitable switches or devices operable to selectively open or close the connected ring at ADN 201. The counterclockwise transport element 220 may also include a dispersion compensation fiber (DCF) segment 245 to provide dispersion compensation. In one embodiment, DCF segment 245 may be included where the network 10 operates at rates at or above 2.5Gb/s, if the circumference of the ring is over 40 kilometers, or depending on the length of the span to the previous ADN. For example, dispersion compensation may be used when 10 Gb/s signal travels over 40 kilometers of 1.3 micrometer zero-dispersion single-mode-fiber.

Clockwise transport element 222 includes a passive optical splitter set including clockwise add coupler 70c and clockwise drop coupler 70d. Clockwise transport element 222 further includes OSC filters 296 and 300, clockwise amplifier 215b, and clockwise ring protection switch 214b. OSC filters 300 and 296 are disposed at the ingress and egress edges, respectively, of the clockwise transport element 222. The clockwise amplifier 215b is disposed between the ingress OSC filter 300 and the drop coupler 70d while the clockwise ring switch 214b is disposed between the amplifier 215b and the drop coupler 70d. Thus, the switch 214b in this embodiment is on the ingress side of the transport element and/or drop coupler. The clockwise transport element 222 may also include a DCF segment 235 to provide dispersion compensation depending, as previously discussed, on the data transport rate and/or the length of the span to the previous ADN or the circumference of the ring.

In operation of the transport elements 220 and 222, amplifiers 215 receive an ingress transport signal from the connected ring 14 or 16 and amplifies the signal. Protection switches 214 allow network 10 to reconfigure traffic flow in response to a ring cut or other fault to provide fault tolerance.

Distributing element 224 may comprise an optical splitter 90. Splitter 90 may comprise a splitter with two optical fiber ingress leads and a plurality of optical fiber drop leads 314. The drop leads 314 may be connected to one or more tunable filters 266 which in turn may be connected to one or more broadband optical receivers 268.

Combining element 226 may be a combining amplifier and may comprise a splitter 91 with a plurality of optical fiber add leads 312 which may be connected to one or more add optical senders 270 associated with a client. Splitter 91 further comprises two optical fiber egress leads, which feed into amplifiers 326 and 328. Amplifiers 326 and 328 may comprise EDFAs or other suitable amplifiers.

Optical sender 270 may include a laser tunable to one of amongst a set of wavelengths. In this embodiment, a lightpath may be established between two ADNs 201 by setting a laser of one of the optical senders in the transmitting ADN to a specified frequency and correspondingly setting to the specified frequency a filter of an optical receiver in the receiving ADN. No other configuration is necessary in network 10 as the traffic channel may be passively combined with and separated from other traffic and is passively added to and dropped from rings 14 and 16. It will be understood that optical senders with fixed lasers and optical receivers with fixed filters may be used in connection with the present invention.

Managing element 228 may comprise OSC senders 272 and 281, OSC interfaces 274 and 280, OSC receivers 276 and 278, and an element management system (EMS) 290. Each OSC sender, OSC interface, and OSC receiver set forms an OSC unit for one of the rings 14 or 16 in the ADN 201. The OSC units receive and transmit OSC signals for the EMS 290. The EMS 290 may be communicably connected to a network management system (NMS) 292. NMS may reside within ADN 201, in a different ADN, or external to all of the ADNs 201.

EMS 290, NMS 292 and/or other elements or parts of ADN 201 or network 10 may comprise logic encoded in media for performing network and/or ADN monitoring, failure detection, protection switching and loopback or localized testing functionality of the network 10. Logic may comprise software encoded in a disk or other computer-readable medium and/or instructions encoded in an application specific integrated circuit (ASIC), field programmable gate array (FPGA), or other processor or hardware. It will be understood that functionality of EMS 290 and/or NMS 292 may be performed by other components of the network 10 and/or be otherwise distributed or centralized. For example, operation of NMS 292 may be distributed to the EMS of ADNs 201 and the NMS omitted. Similarly, the OSC units may communicate directly with NMS 292 and EMS 290 omitted.

The ADN 201 further comprises counterclockwise add fiber segment 302, counterclockwise drop fiber segment 304, clockwise add fiber segment 306, clockwise drop fiber segment 308, OSC fiber segments 282, 284, 286, and 288, and optical spectrum analyzer (OSA) connectors 250, 254, 256, and 258. The OSA connectors may be angled connectors to avoid reflection. Test signal may sometimes be fed into the network from connectors 248 and 252. As previously described, a plurality of passive physical contact connectors 230 may be included where appropriate so as to communicably connect the various elements of ADN 201.

In operation, the transport elements 220 and 222 are operable to passively add local traffic to the rings 14 and 16 and to passively drop at least local traffic from the rings 14 and 16. The transport elements 220 and 222 may further be operable to passively add and drop the OSC signal to and from the rings 14 and 16. More specifically, in the counterclockwise direction, OSC filter 294 processes an ingress optical signal from counterclockwise ring 16. OSC filter 294 filters OSC signal from the optical signal and forwards the OSC signal to the OSC interface 274 via fiber segment 282 and OSC receiver 276. OSC filter 294 also forwards or lets pass the remaining transport optical signal to amplifier 215a. By placing the OSC filter 294 outside of the ring switch 214a, the ADN 201 is able to recover the OSC signal regardless of the position of the ring switch 214a.

Amplifier 215a amplifies the signal and forwards the signal to ring switch 214a. Ring switch 214a is selectively operable to transmit the optical signal to coupler 70a when the ring switch 214a is set to the through (closed) setting, or to transmit the optical signal to OSA connector 250 when the ring switch 214a is set to the cross (open) setting. Further details regarding the OSA connectors are described below.

If ring switch 214a is set in the cross position, the optical signal is not transmitted to couplers 70a and 70b, the ring 16 is open at the ADN 201, and dropping of traffic from the ring 16 does not occur at ADN 201. However, adding of traffic at ADN 201 occurs and the added traffic flows to the next ADN in the ring 16. If the ring switch 214a is set in the through position, the optical signal is forwarded to couplers 70a and 70b and adding and dropping of traffic to and from the ring 16 may occur at ADN 201.

Coupler 70a passively splits the signal from switch 214a into two generally identical signals. A passthrough signal is forwarded to coupler 70b while a drop signal is forwarded to distributing element 224 via segment 304. The signals may be substantially identical in content and/or energy. Coupler 70b passively combines the passthrough signal from coupler 70a and an add signal comprising local add traffic from combining element 226 via fiber segment 302. The combined signal is passed to OSC filter 298.

The combining and splitting of signals may be performed by a single coupler 70 with integrated optical combiner and splitter elements or a plurality of couplers each having one or a portion of the combiner or splitter elements. Although the dual coupler arrangement increases the total number of couplers in transport elements 220 and 222, the two-coupler arrangement may reduce channel interference by dropping local traffic from ring 14 or 16 before adding traffic to ring 14 or 16.

OSC filter 298 adds an OSC signal from the OSC interface 274, via the OSC sender 272 and fiber segment 284, to the combined optical signal and forward the combined signal as an egress transport signal to ring 16. The added OSC signal may be locally generated data or may be received OSC data passed through the EMS 290.

In the clockwise direction, OSC filter 300 receives an ingress optical signal from clockwise ring 14. OSC filter 300 filters the OSC signal from the optical signal and forwards the OSC signal to the OSC interface 280 via fiber segment 286 and OSC receiver 278. OSC filter 300 also forwards the remaining transport optical signal to amplifier 215b.

Amplifier 215b amplifies the signal and forwards the signal to ring switch 214b. Ring switch 214b is selectively operable to transmit the optical signal to coupler 70d when the ring switch 214b is set to the through setting, or to transmit the optical signal to OSA connector 254 when the ring switch 214b is set to the cross setting.

If the ring switch 214b is set in the cross position, the optical signal is not transmitted to couplers 70d and 70c, the ring 16 then is open at the ADN 201, and dropping of traffic from the ring 14 does not occur at ADN 201. However, adding of traffic to the ring 14 occurs at ADN 201. If the ring switch 214b is set in the through position, the optical signal is forwarded to couplers 70d and 70c and adding and dropping of traffic to and from the ring 14 may occur at ADN 201.

Coupler 70d passively splits the signal from switch 214b into generally identical signals. A passthrough signal is forwarded to coupler 70c while a drop signal is forwarded to distributing unit 224 via segment 308. The signals may be substantially identical in content and/or energy. Coupler 70c passively combines the passthrough signal from coupler 70d and an add signal comprising local add traffic from combining element 226 via fiber segment 306. The combined signal is passed through to OSC filter 296.

OSC filter 296 adds the OSC signal from the OSC interface 280, via the OSC sender 281 and fiber segment 288, to the combined optical signal and forwards the combined signal as an egress transport signal to ring 14. As previously described, the OSC signal may be locally generated data or data passed through by EMS 290.

Prior to addition to the rings 14 and 16, locally-derived traffic is transmitted by a plurality of add optical senders 270 to combining element 226 of the ADN 201 where the signals are combined, amplified, and forwarded to the transport elements 220 and 222, as described above, via counterclockwise add segment 302 and clockwise add segment 306. The locally derived signals may be combined by the optical splitter 91, by a multiplexer, or other suitable device.

Locally-destined traffic is dropped to distributing element 224 from counterclockwise drop segment 304 and clockwise drop segment 308. Distributing element 224 splits the drop signal comprising the locally-destined traffic into multiple generally identical signals and forwards each signal to an optical receiver 268 via a drop lead 314. The signal received by optical receivers 268 may first be filtered by filters 266. Filters 266 may be tunable filters or other suitable filters and receivers 268 may be broadband or other suitable receivers.

EMS 290 monitors and/or controls all elements in the ADN 201. In particular, EMS 290 receives an OSC signal in an electrical format via OSC filters 294, 296, 298 and 300, OSC receivers 276 and 278, OSC senders 272 and 281, and OSC interfaces 274 and 280. EMS 290 may process the signal, forward the signal and/or loopback the signal. Thus, for example, the EMS 290 is operable to receive the electrical signal and resend the OSC signal to the next ADN, adding, if appropriate, ADN-specific error information or other suitable information to the OSC.

In one embodiment each element in an ADN 201 monitors itself and generates an alarm signal to the EMS 290 when a failure or other problem occurs. For example, EMS 290 in ADN 201 may receive one or more of various kinds of alarms from the elements and components in the ADN 201: an amplifier loss-of-light (LOL) alarm, an amplifier equipment alarm, an optical receiver equipment alarm, optical sender equipment alarm, a distributing amplifier LOL alarm, a distributing amplifier equipment alarm, a combining amplifier LOL alarm, a combining amplifier equipment alarm, or other alarms. Some failures may produce multiple alarms. For example, a ring cut may produce amplifier LOL alarms at adjacent ADNs and also error alarms from the optical receivers.

In addition, the EMS 290 may monitor the wavelength and/or power of the optical signal within the ADN 201 via connections (not shown) between the OSA connectors 250, 254, 256, and 258 and an optical spectrum analyzer (OSA) communicably connected to EMS 290.

The NMS 292 collects error information from all of the ADNs 201 and is operable to analyze the alarms and determine the type and/or location of a failure. Based on the failure type and/or location, the NMS 292 determines needed protection switching actions for the network 10. The protection switch actions may be carried out by NMS 292 by issuing instructions to the EMS 290 in the ADNs 201. After a failure is fixed, the network 10 does not require reverting. Thus, the open ring network configuration does not change for protection switching, only the location of the openings. In this way, network operation is simplified and ADN programming and operation is cost minimized or reduced.

Error messages may indicate equipment failures that may be rectified by replacing the failed equipment. For example, a failure of one of the amplifiers in the distributing element may trigger a distributing amplifier alarm. The failed amplifier can then be replaced. A failed coupler in the distributing element may be likewise detected and replaced. Similarly, a failure of an optical receiver or sender may trigger an optical receiver equipment alarm or an optical sender equipment alarm, respectively, and the optical receiver or sender replaced as necessary. The optical sender should have a shutter or cold start mechanism. Upon replacement, no other switching or reversion from a switched state may be required. The NMS 292 may trigger a protection switching protocol in response to certain messages or combinations of messages.

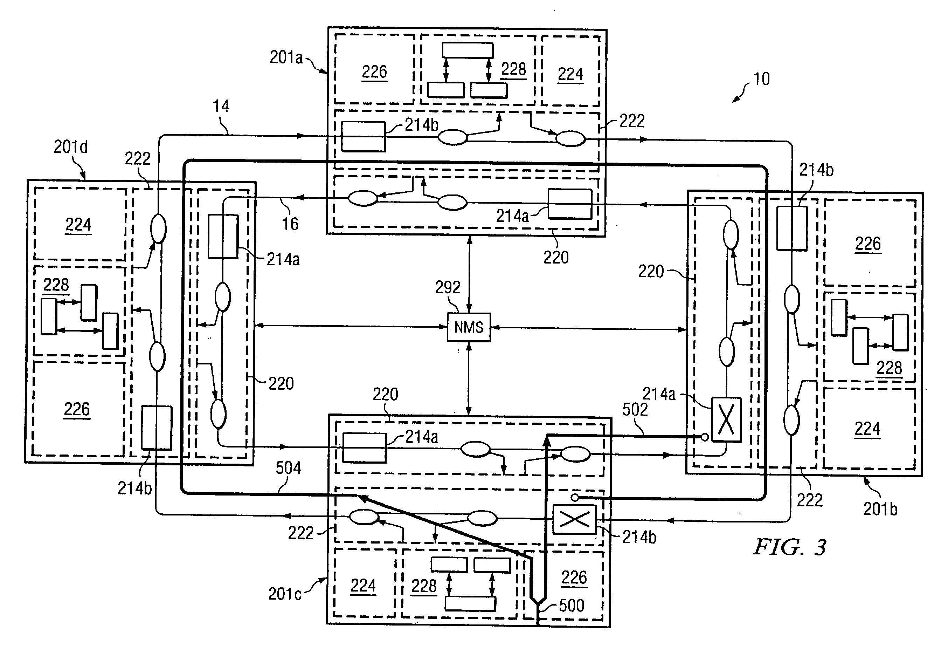

FIGURE 3 illustrates the optical network 10 with high level details of the ADNs 201a-d. As previously described, each ADN includes a counterclockwise transport element 220, a clockwise transport element 222, a distributing element 224, a combining element 226, and a managing element 228. The transport elements add and/or drop traffic to and from the rings 14 and 16. The combining element 226 combines ingress local traffic to generate an add signal that is provided to the transport elements 220 and 222 for transmission on the rings 14 and 16. The distributing element 224 receives a dropped signal and recovers local egress traffic for transmission to local clients. The managing element 228 monitors operation of the ADN 201 and/or network 10 and communicates with an NMS 292 for the network 10.

Each ADN 201a-d includes a ring switch 214a and a ring switch 214b in each transport element 220 and 222, respectively, that is controllable to selectively open or close the connected ring 14 or 16 prior to the dropping or adding of traffic by the transport element 220 or 222 in the ADN. The ring switches 214 may be otherwise suitably positioned within one or more or each ADN 201 prior to the dropping and/or adding of traffic, at an inside or outside edge of the ADN 201 or between the ADN and a neighboring ADN 201.

During normal operation, a single ring switch 214 is crossed or otherwise open in each ring 14 and 16 while the remaining ring switches 214 are closed. Thus, each ring 14 and 16 is continuous or otherwise closed except at the ring switch 214 that is open. The ring switches 214 that are open in the rings 14 and 16 together form a switch set that effectively opens the rings 14 and 16 of the network 10 in a same span and/or corresponding point of the network 10. A same span is opened in the network 10 in that, for example, the ADNs 201 neighboring the span do not receive and/or receive for dropping ingress traffic from the span. Such alignment of the open ring switches 214 in, along, or at the periphery of a span allows each ADN 201 may communicate with each other ADN 201 in the network 10 while avoiding or minimizing interference from circulating traffic.

In the illustrated embodiment, ring switch 214b in the clockwise transport element 222 of ADN 201c is crossed as is ring switch 214a in the counterclockwise transport element 220 of ADN 201b. The remaining ring switches 214 are closed to a through position. A traffic channel 500 added at ADN 201c travels around the rings 14 and 16 in exemplary lightpaths 502 and 504. In particular, a counterclockwise lightpath 502 extends from the combining element 226 of ADN 201c to the counterclockwise transport element 220 where it is added to counterclockwise ring 16. On counterclockwise ring 16, lightpath 502 extends to ADN 201b where it is terminated by the crossed ring switch 214a of the counterclockwise transport element 220. Clockwise lightpath 504 extends from the combining element 226 of ADN 201c to the clockwise transport element 222 of ADN 201c where it is added to clockwise ring 14. On clockwise ring 14, lightpath 504 extends to ring 201d, through the clockwise transport element 222 of ring 201d, to ring 201a, through the clockwise transport element 222 of ring 201a, to ADN 201b, through the clockwise transport element 222 of ADN 201b, and back to ADN 201c where it is terminated by the crossed ring switch 214d on the ingress side of the clockwise transport element 222. Thus, each ADN 201a-d is reached by each other ADN from a single direction and traffic is prevented from circulating around either ring 14 and 16 or otherwise causing interference.

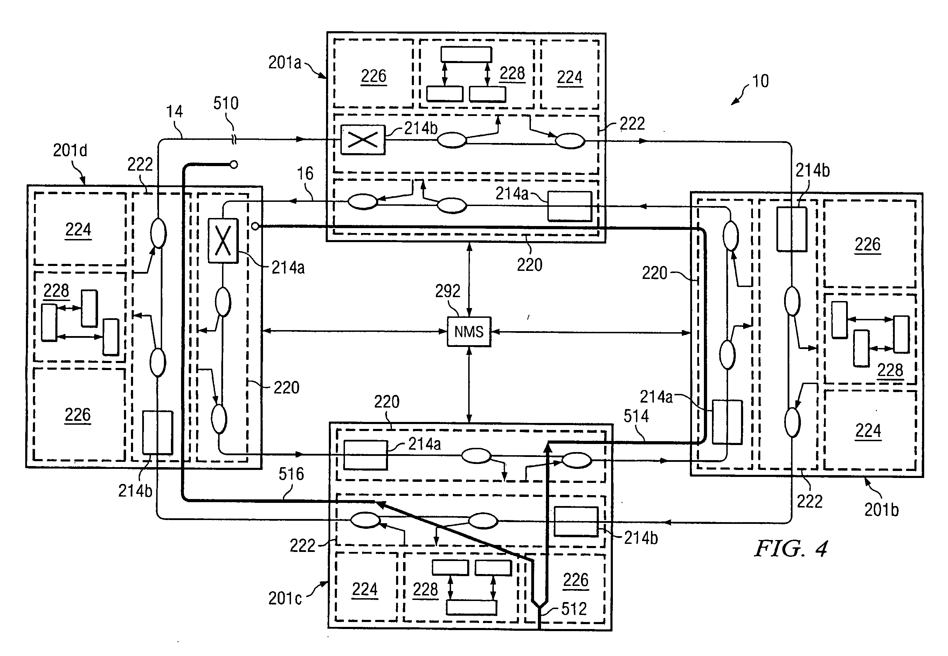

FIGURE 4 illustrates protection switching and lightpath protection for network 10. As previously described, each ADN 201a-d includes clockwise and counterclockwise transport elements 220 and 222 as well as the combining, distributing and managing elements 224, 226, and 228. The managing elements each communicate with NMS 292.

A ring cut 510 is shown in ring 14 between ADNs 201a and 201d. In response, as described in more detail below, the NMS 292 opens the ring switch 214a in counterclockwise transport element 220 of ADN 201d and the ring switch 214b in clockwise transport element 222 of ADN 201a, thus effectively opening the span between ADNs 201a and 201d. After opening the rings 14 and 16 on each side of the break, the NMS 292 closes any previously open ring switches 214 in the ADNs 201. Thus, at any given point in time, the ring is always open.

After protection switching each ADN 201 in the network 10 continues to receive traffic from each other ADN 201 in the network 10, and an operable open ring configuration is maintained. For example, a signal 512 originated in ADN 201c is transmitted on counterclockwise lightpath 514 to ADNs 201b and 201a and transmitted on clockwise lightpath 516 to ADN 201d. In one embodiment, the NMS 292, EMS 290 and the 2x2 ring switches 214 may be configured for fast protection switching, with a switching time of less than 10 milliseconds. In the other example, the input monitor of ingress amplifier 215b on the clockwise ring 14 in the ADN 201a detects the loss of light due to the ring cut 510, then the EMS 290 in the ADN 201 a may open the ring switch 214b in the ADN 201 a locally. The EMS 290 reports to NMS 292. The NMS opens the ring switch 214a in the ADN 201 d and closes any previous open ring switches 214 in the ADNs 201.

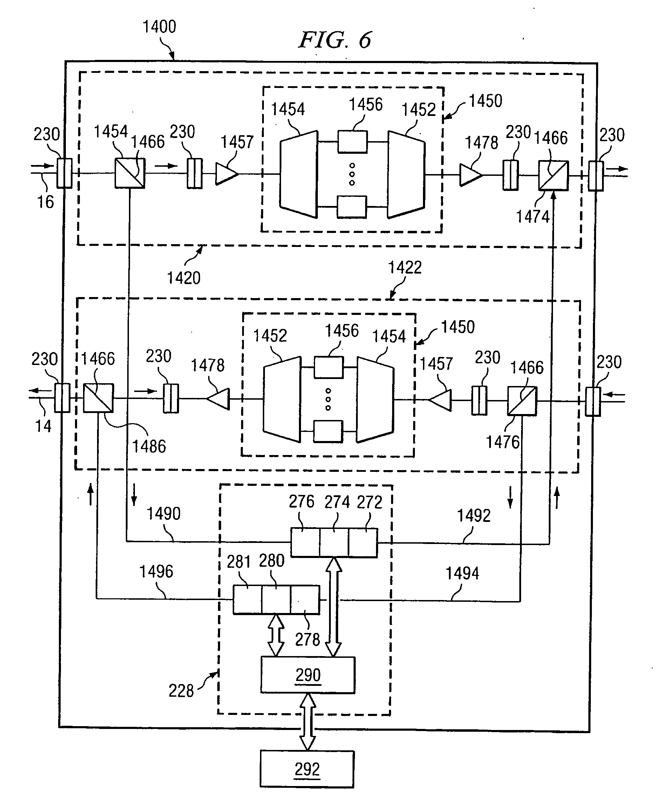

Because network 10 contains elements which allow for protection switching and lightpath protection, as shown in FIGURE 4, network 10 may be upgraded while in service without disrupting traffic in the network. As discussed above, a ring cut 510, or other interruption of traffic, will not prevent any ADN 201 in the network from receiving traffic. Therefore, network maintenance or upgrade procedures which require a ring to be cut will not cause a disruption in the traffic flow on the network. For example, network 10 may be upgraded to an optical ring network having two optical subnets (the configuration of network 1000 of FIGURE 5, discussed below with reference to FIGURES 5-9) by cutting rings 14 and 16 of network 10 in the appropriate locations and inserting two network gateways. For example, rings 14 and 16 may be cut between ADNs 201d and 201a and gateway 1400a may be inserted and connected to the network. While the rings are cut, the network provides protection switching as illustrated in FIGURE 4. In this manner, the network stays in service, as traffic is able to flow around the network while the network is being upgraded.

Next, rings 14 and 16 may be cut between ADNs 201 b and 201 c and gateway 1400b may be inserted and connected to the network. Installation of each gateway is independent of the installation of the other gateway. Once a first gateway (1400a) is installed, traffic is allowed to flow through the gateway normally. This procedure is repeated for the second gateway (1400b).

FIGURE 5 is a block diagram illustrating an optical network 1000. Network 1000 is an upgraded form of network 10, where network 10 is upgraded to network 1000 by adding gateways 1400a and 1400b, as described above.

In accordance with this embodiment, the network 1000 is an optical ring. An optical ring may include, as appropriate, a single, unidirectional fiber, a single, bi-directional fiber, or a plurality of uni- or bi-directional fibers. In the illustrated embodiment, the network 1000 includes a pair of unidirectional fibers, such that each fiber is transporting traffic in opposite directions, specifically a first fiber, or ring, 14 and a second fiber, or ring, 16. Rings 14 and 16 connect a plurality of ADNs 201 and optical wavelength reuse gateways 1400.

Rings 14 and 16 and ADNs 201 are subdivided into subnets 1200 and 1300, with the gateways 1400 forming the subnet boundaries. A subnet may be defined as a subset of ADNs on a ring whose wavelengths are not isolated from each other and which may comprise traffic streams from ADNs within the subnet, but whose wavelengths are isolated from traffic streams from other ADNs on the ring, except for a minority of wavelengths (at least during normal operations) that transport traffic streams that pass through, enter or exit the subnet in order to reach their destination ADNs. The gateways may be operable to terminate ingress traffic channels from a subnet that have reached their destination ADNs (including those that have or will reach their destination ADNs in an opposite direction) and to forward ingress traffic channels from a subnet that have not reached their destination ADNs. In one embodiment, the gateway ADNs may comprise a demultiplexer to demultiplex the signal into constituent traffic channels, switches to selectively terminate traffic channels, and a multiplexer to multiplex the remaining signal before exiting the gateway. Further details regarding the gateways 1400 are described below in reference to FIGURE 6.

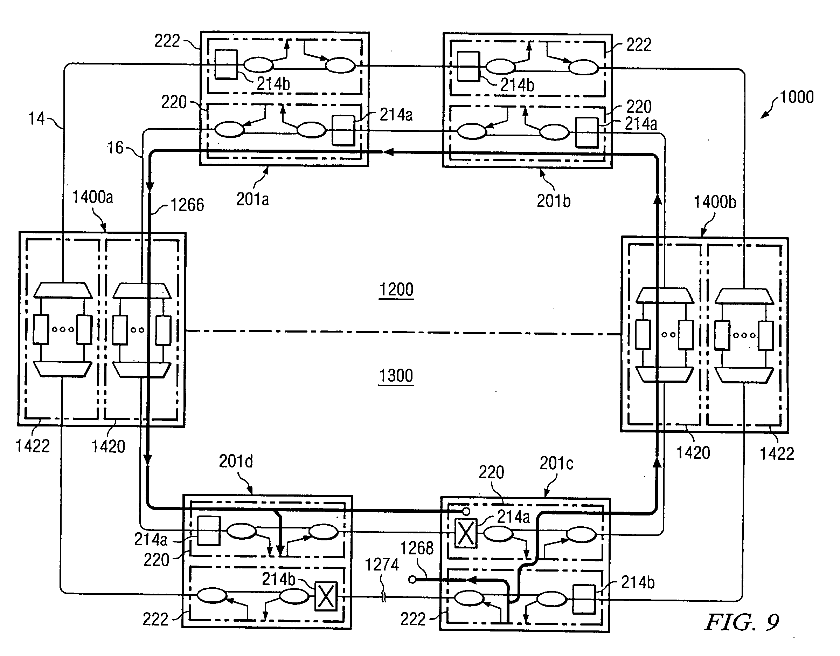

Each ring 14 and 16 is open, at one point at least, for each channel. wavelength. The opening for each channel in the rings 14 and 16 may be a physical opening, an open, crossed, or other non-closed switch, a blocking filter, a deactivated transmission device or other suitable obstruction operable to completely or effectively terminate, and thus remove channels from the rings 14 and 16 at the terminal points such that interference of each channel with itself due to recirculation is prevented or minimized such that the channels may be received and decoded within normal operating limits. As described further below in reference to FIGURE 9, the rings 14 and 16 may, in response to a ring cut or other interruption, be provisioned to terminate in ADNs 201 adjacent to the interruption using switch elements in ADNs 201. Switch elements may comprise simple on-off switches, 2x2 switches, optical cross connects, or other suitable optical switch elements.

In one embodiment, a portion of the channels is open at the boundaries of the subnets at both gateways 1400. Within each subnet, traffic is passively added to and passively dropped from the rings 14 and 16, channel spacing is flexible, and the ADNs are free to transmit and receive signals to and from ADNs within the subnet. Such traffic may be referred to as "intra-subnet traffic." Another portion of the traffic
- "inter-subnet traffic" - may travel to and from ADNs in the other subnets, and the lightpaths of such traffic would be open at only one of the gateways. Such inter-subnet traffic traverses or travels within at least part of two subnets and can travel to multiple subnets, as well.

Because an intra-subnet traffic stream utilizes its wavelength/channel only within its subnet, the wavelength/channel used for intra-subnet traffic in one subnet is free to be used in the other subnet by another traffic stream. In this way, the present invention increases the overall capacity of the network, while maintaining flexible channel spacing within individual subnets.

Furthermore, it is possible to protect a first traffic stream in a channel within in a first subnet by assigning low priority signals to a second channel stream using the same channel in the second subnet, such that the second channel stream becomes a protection channel access (PCA) stream. Low priority signals are signals that are terminated to provide protection to other higher-priority signals. Protectable signals are signals for which protection is provided. In this way, in the event of a ring cut or other interruption causing the first traffic stream to not reach all of its destination ADNs, the second traffic stream may be terminated and a gateway switch for that channel closed, thus allowing the first traffic stream to travel through the gateway and through the second subnet back to the destination ADNs of the first subnet and avoiding the interruption. After the interruption has been repaired, the network may revert to its pre-interruption state such that open gateway switches for the channel again separate the network into two subnets for the channel. Details of such protection switching are described further in reference to FIGURE 9.

A protocol for assigning channels to traffic in the network may be devised to allow for efficient and simple provisioning of the network. For example, protection-switchable traffic from ADNs 201 in subnet 1200 is conveyed in odd-numbered channels and non-protected, terminable traffic from ADNs 201 in subnet 1200 is conveyed in even numbered channels, whereas protection-switchable traffic from ADNs 201 in subnet 1300 is conveyed in even-numbered channels and non-protected, terminable traffic from ADNs 201 in subnet 1300 is conveyed in odd-numbered channels. In this way, a protection-switchable traffic stream in one subnet will be assured a protection path occupied only by terminable traffic in the other subnet. In one embodiment, the protection-switchable traffic may comprise higher-priority traffic than the terminable traffic; however, it will be understood that other divisions of the traffic streams into protection-switchable and terminable portions may be suitable or desirable in other embodiments.

FIGURE 6 is a block diagram illustrating details an optical wavelength reuse gateway 1400 of the network of FIGURE 5. Each channel (wavelength) is separated from the multiplexed signal and independently passed or terminated. In other embodiments, groups of channels may be passed or terminated. As previously described, the gateway is disposed between, and may form the boundary of, neighboring subnets. A channel reuse gateway in one embodiment may be any suitable ADN, ADNs or element of one or more ADNs that is configurable to selectively isolate or expose wavelengths between ADNs in one or more directions of a ring or other suitable network configuration. Wavelength reuse is the ability to map two graphically disjointed lightpaths onto the same fiber.

Referring to FIGURE 6, the wavelength reuse gateway comprises a management element 228 comprising OSC senders 272 and 281, OSC interfaces 274 and 280, OSC receivers 276 and 278, and an EMS 290, as described above in reference to FIGURE 2. The EMS 228 is connected to transport elements 1420 and 1422 via OSC fiber segments 1490, 1492, 1494, 1496, again as described in reference to FIGURE 2.

As described above in reference to FIGURE 2, counterclockwise transport element 1400 comprises OSC filters 1454 and 1474 and amplifier 1457. Counterclockwise transport element 1420 also includes post-amplifier 1478. Clockwise transport element 1422 comprises OSC filters 1476 and 1486, amplifier 1457, and post-amplifier 1478. Transport elements 1420 and 1422 further comprises mux/demux units 1450. Mux/demux units 1450 may each comprise demultiplexer 1454, multiplexer 1452, and switch elements which may comprise a set of switches 1456 or other components operable to selectively pass or terminate a traffic channel. In a particular embodiment, optical signal multiplexers 1452 and demultiplexers 1454 may comprise arrayed waveguides. In another embodiment, the multiplexers 1452 and the demultiplexers 1454 may comprise fiber Bragg gratings. The switches 1456 may comprise 2x2 or other suitable switches, optical cross-connects, or other suitable switches operable to terminate the demultiplexed traffic channels.

Pre-amplifiers 1457 may use an automatic level control (ALC) function with wide input dynamic-range and automatic gain control (AGC). ALC means the act of controlling the total output power of an optical amplifier despite dynamic transients acting on the system. Post-amplifiers 1478 may deploy AGC to realize gain-flatness against input power variation due to channel add/drop, too. In a particular embodiment, the amplifiers 1457 and 1478 may be gain variable amplifiers, such as, for example, as described in U.S. Patent No. 6,055,092.

In operation, counterclockwise transport element 1420 receives a WDM signal, comprising a plurality of channels, from ring 16. OSC filter 1454 filters the OSC signal from the optical signal as described above and the remaining optical signal is forwarded to amplifier 1457, as described above. Demultiplexer 1454 demultiplexes the optical signal into its constituent channels. Switches 1456 selectively forward or terminate channels to multiplexer 1452. Multiplexer 1452 multiplexes the channels into one optical signal and to forward the optical signal to OSC filter 1474. OSC filter 1474 adds the OSC signal from EMS 228, and the ring 16 receives the egress signal.

Clockwise transport element 1422 receives an optical signal from ring 14. OSC filter 1476 filters the OSC signal from the optical signal as described above and the remaining optical signal is forwarded to amplifier 1478, as described above. Demultiplexer 1454 demultiplexes the optical signal into its constituent channels. Switches 1456 selectively forward or terminate channels to multiplexer 1452. Multiplexer 1452 multiplexes the channels into one optical signal and to forward the optical signal to OSC filter 1486. OSC filter 1486 adds the OSC signal from EMS 228, and the ring 14 receives the egress signal.

EMS 228 configures mux/demux units 1450 to provide protection switching. Protection switching protocols are described in greater detail below. In accordance with various embodiments, gateways 1400 may be further operable to add and drop traffic from and to local clients and/ or to and from other networks.

In accordance with various other embodiments, gateway 1400 may be further provisioned to passively add and drop traffic to the optical rings. For example, in accordance with one embodiment, transport elements 220 and 222 of FIGURE 2 may be added to gateway 1400 on the rings 14 and 16 next to the mux/demux units 1450. In another embodiment, traffic may be added via the add and drop leads of 2x2 switches within the mux/demux units.

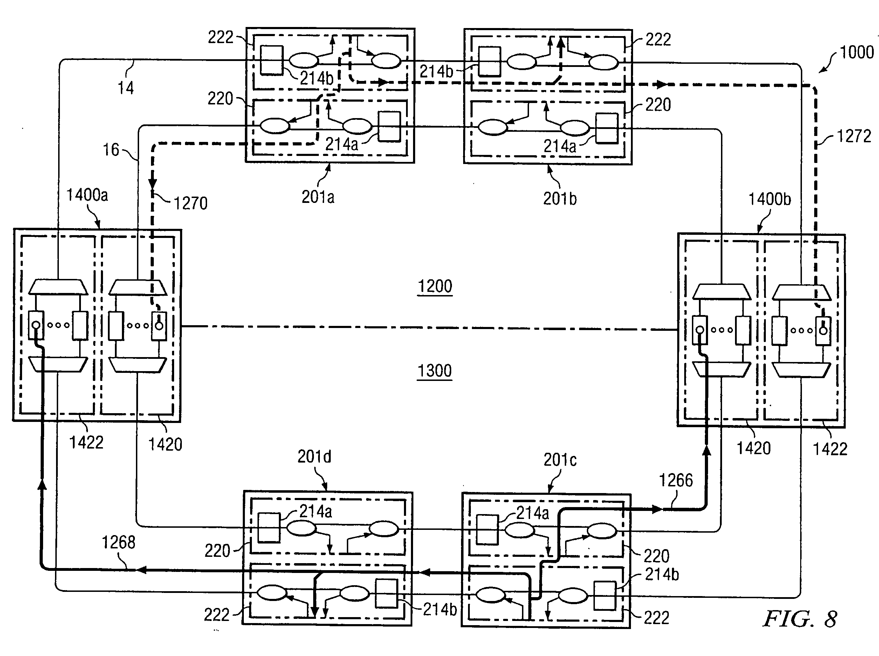

FIGURE 7A is a block diagram illustrating a mux/demux unit of the gateway of FIGURE. Mux/demux unit 1460 of FIGURE 7A may be substituted for mux/demux modules 1450 of FIGURE 6.

Referring to FIGURE 7A, mux/demux unit 1460 comprises demultiplexer 1454 and multiplexer 1452 as described above in reference to FIGURE 6. In place of the plurality of switches 1456 are a plurality of 2x2 switch/attenuator sets each comprising 2x2 switch 1461, variable optical attenuator (VOA) 1462, optical splitter 1463, photodetector 1465, and controller 1464. VOA 1462 attenuates the ingress signal to a specified power level based on a feedback loop including splitter 1463 which taps the signal, photodetector 1465 which detects the power level of the signal and feedback controller 1464 which controls VOA 1462 based on the detected power level. In this way, the rings may be opened for a particular channel by switching the 2x2 switch to the "cross" position, and the power level of the "through" signal when the 2x2 switch is in the "through" position may be adjusted. Also, as described above, traffic may be added and/or dropped from the rings via the add and drop leads of 2x2 switches 1461.

FIGURE 7B is a block diagram illustrating a mux/demux unit of the gateway of FIGURE 6. The mux/demux the unit is an optical-electrical-optical (O-E-O) unit. Unit 1470 of FIGURE 7B may be substituted for mux/demux modules 1450 of

### FIGURE 6.

Referring to FIGURE 7B, O-E-O unit 1480 comprises demultiplexer 1454 and multiplexer 1452 as described above in reference to FIGURE 6. In place of the plurality of switches 1456 are a plurality of O-E-O elements, each comprising receivers 1482, switches 1484, and transmitters 1485. A demultiplexed signal is passed to the receiver 1482 corresponding to its channel, wherein the optical signal is converted to an electrical signal. Switches 1484 are operable to selectively pass or terminate the electrical signal from receiver 1482. A signal passed through via switch 1484 is forwarded to transmitter 1486, wherein the signal is converted to an optical signal. Optical signals from the plurality of transmitters 1486 are multiplexed in multiplexer 1452 and the multiplexed signal forwarded as described above in reference to FIGURE 6. Thus, O-E-O 1480 unit may act as a regenerator of the signals passing through the gateway 1400.

FIGURE 8 is a block diagram illustrating lightpaths of optical signals of the optical network of FIGURE. Paths of exemplary intra-subnet signals are illustrated. For ease of reference, only high-level details of the transport elements of ADNs 201 and gateways 1400 are shown. In addition, ADNs 201 are assigned individual reference numbers, with ADNs 201a and 201b within subnet 1200 and ADNs 201c and 201d within subnet 1300. Gateways 1400a and 1400b form the boundary between subnets 1200 and 1300.

Lightpaths 1266 and 1268 represent a traffic stream added to the network from an origination ADN 201c (the "ADN 201c traffic stream") in the counterclockwise and clockwise directions, respectively. In the illustrated embodiment, the intended destination ADN of the ADN 201c traffic stream is ADN 201d. Lightpath 1266 terminates at gateway 1400b at an open switch (or "cross" state of 2x2 switch) in counterclockwise transport segment 1420 corresponding to the channel of the traffic stream. Lightpath 1268 terminates at gateway 1400a in clockwise transport segment 1422 at an open switch in clockwise transport segment 1422 corresponding to the channel of the traffic stream. It will be noted that, although FIGURE 8 shows ADN 201d as the destination ADN, the traffic also reaches gateways 1400a and 1400b. Likewise, traffic originating from ADN 201a, while shown as having a destination ADN 201b, also reaches gateways 1400a and 1400b (if any).

In the illustrated embodiment, lightpaths 1270 and 1272 represent a traffic stream added to the network from an origination ADN 201 a (the "ADN 201 a traffic stream") in the counterclockwise and clockwise directions, respectively. In the illustrated embodiment, the intended destination ADN of the ADN 201 a traffic stream is ADN 201b. Lightpath 1270 terminates at gateway 1400a at an open switch in counterclockwise transport segment 1420 corresponding to the channel of the traffic stream. Lightpath 1272 terminates at gateway 1400b at an open switch in clockwise transport segment 1422 corresponding to the channel of the traffic stream.

The ADN 201c traffic stream and the ADN 201a traffic stream may represent different traffic but may be conveyed on the same wavelength. However, the ADN 201c traffic stream and the ADN 201a traffic stream are isolated within different subnets that are graphically disjointed. In this way, the overall capacity of the network is increased for that channel, even though channel flexibility is maintained within each subnet.

Either the ADN 201c traffic stream or the ADN 201a traffic stream (each using the same channel) may be assigned a terminable status. "Terminable" in this context means that that stream may be selectively terminated to provide a protection path for the another stream. The other stream may be a protectable stream, "protectable" meaning that it may be protected in the event of an interruption of one of the lightpaths of that traffic stream via protection switching. The lightpath of the protectable traffic stream may be termed the "working path" and the lightpath of the terminable traffic stream may be termed the "protection path." Thus, in the illustrated example, a client adding traffic to the network via ADN 201c may pay a premium for a working path that will be protected in the event of a ring cut or other interruption. Such traffic may comprise voice, video, or other real-time or time-sensitive traffic. The client adding traffic to the network at ADN 201a may pay a lesser amount to use the protection path of the premium client of the other subnet, subject to termination if necessary to protect the working path. An example of such protection switching is shown in FIGURE 9.

FIGURE 9 is a block diagram illustrating protection switching and lightpath protection of the working lightpath of FIGURE 8. In the example shown in FIGURE 9, as described above, the path 1268 of the ADN 201c traffic stream from origination ADN 201c to destination ADN 201d is dedicated as the working path, whereas the lightpaths 1270 and 1272 of the ADN 201a traffic stream are protection paths. The ADN 201a traffic stream and the ADN 201c traffic stream in the illustrated embodiment are carried on the same channel.

In the illustrated example, the ring cut 1274 prevents the ADN 201c traffic stream as shown in FIGURE 8 from reaching its destination ADN 201d. Specifically, the ring cut prevents traffic from travelling on line path 1268 to ADN 201d. Pursuant to the protection switching protocol, the ADN 201a traffic stream is terminated, and the switches 1456 in gateways 1400a and 1400b corresponding to the wavelength of the ADN 201a traffic stream and the ADN 201c traffic stream are closed, allowing the ADN 201c traffic stream to pass through gateway 1400b and enter subnet 1200 and be carried in a counterclockwise direction to ADN 201d. In this way, each of the destination ADNs of the ADN 201c traffic stream receive the ADN 201c traffic stream. In order to ensure an opening in the rings 14 and 16 in the channel of the ADN 201c traffic stream during protection switching, switch 214a in the transport element 220 of ADN 201c and switch 214b in the transport element 222 of ADN 201d are opened. In this way, channel interference is prevented, for example, if the ring cut 1274 only affects one ring, or during repair operations. In a particular embodiment, for any working channel in a working path interruption, the corresponding protection channel in the protection path is terminated and the switches in the gateways are opened. If work channels are not affected, the system continues as before.

After repair of the ring cut, the network is reverted to its pre-protection switching state shown in FIGURE 8. Specifically, the switches in gateways 1400b and 1400a corresponding to the wavelength of the ADN 201 a traffic stream and the ADN 201c traffic stream are opened, thus confining the ADN 201c traffic stream to the subnet 1300, and the switches 214a in ADNs 201c and 201d are closed. In this way, the "protection path" is recovered. The ADN 201 a traffic stream may then be transmitted on paths 1270 and 1272. In a particular embodiment, the NMS of the network 1000 may be operable to choose the shortest protection path from among a plurality of possible protection paths.

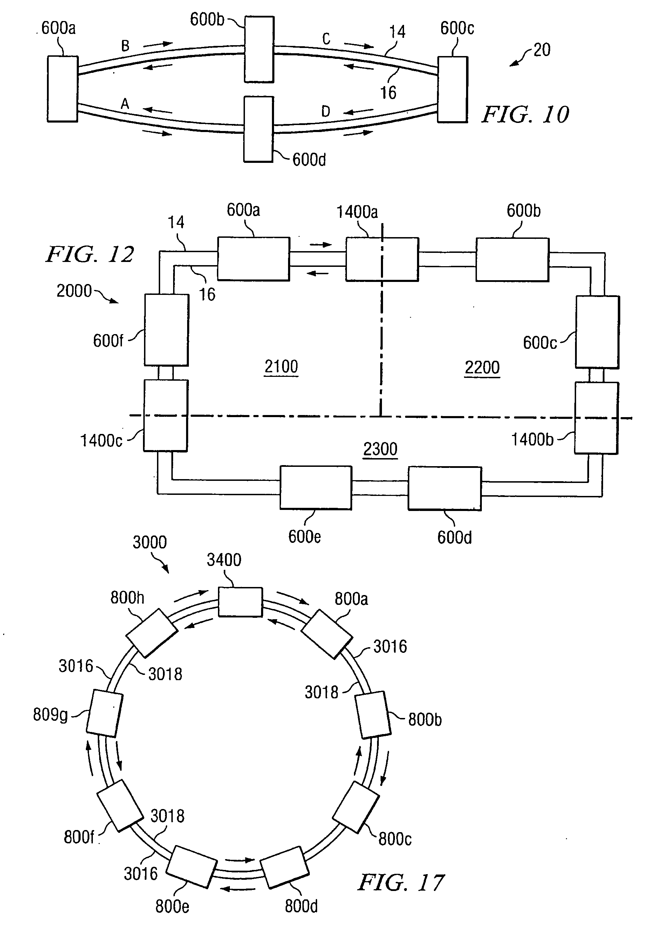

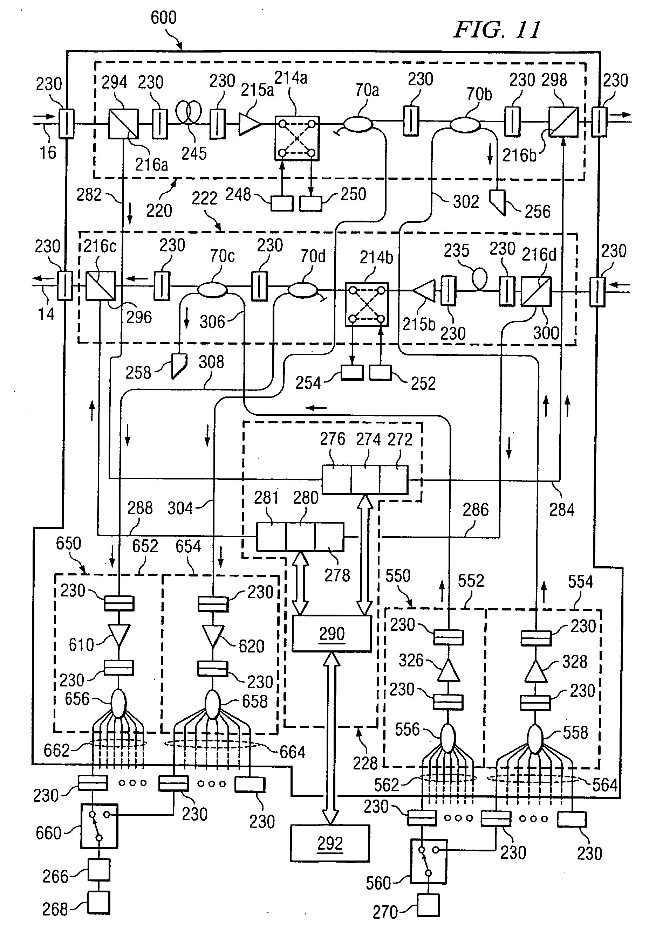

FIGURE 10 illustrates an example optical network 20. Network 20 is similar to network 10 with the exception that ADNs 600, described below with reference to FIGURE 11, replace ADNs 201 of network 10.

FIGURE 11 illustrates an example ADN 600. ADNs 600 allow for OUPSR protection switching within a network. ADN 600 is similar to ADN 201 except that distributing element 224 and combining element 226 of ADN 201 are replaced with divided distributing element (DDE) 650 and divided combining element (DCE) 550, respectively.

In certain embodiment, DDE 650 comprises two separate or separable distributing elements, each of which forward traffic to a different ring or direction. DDE 650 comprises a clockwise amplified distributor 652 and a counterclockwise amplified distributor 654. Clockwise amplified distributor 652 comprises amplifier 610 and splitter 656 with a plurality of optical fiber drop leads 662. Counterclockwise amplified distributor 654 comprises amplifier 620 and splitter 658 with a plurality of optical fiber drop leads 664. Amplifiers 610 and 620 may comprise EDFAs or other suitable amplifiers.

Optical filters 266 and receivers 268, described above in reference to FIGURE 2, may be associated with a local client and are each coupled to one of a plurality of switches 660. Switches 660 are operable to forward the traffic from either clockwise amplified distributor 652 or from counterclockwise amplified distributor 654. Each traffic stream may be associated with a dedicated receiver.

In regular operation, an optical signal may be dropped from the transport elements 220 or 222 and forwarded to distributors 652 or 654 via drop leads 308 or 304, respectively. The signal is amplified and split by splitters 656 or 658 and forwarded by a switch 660 to an optical filter 266. Optical filter 266 selectively passes a channel to a receiver 268.

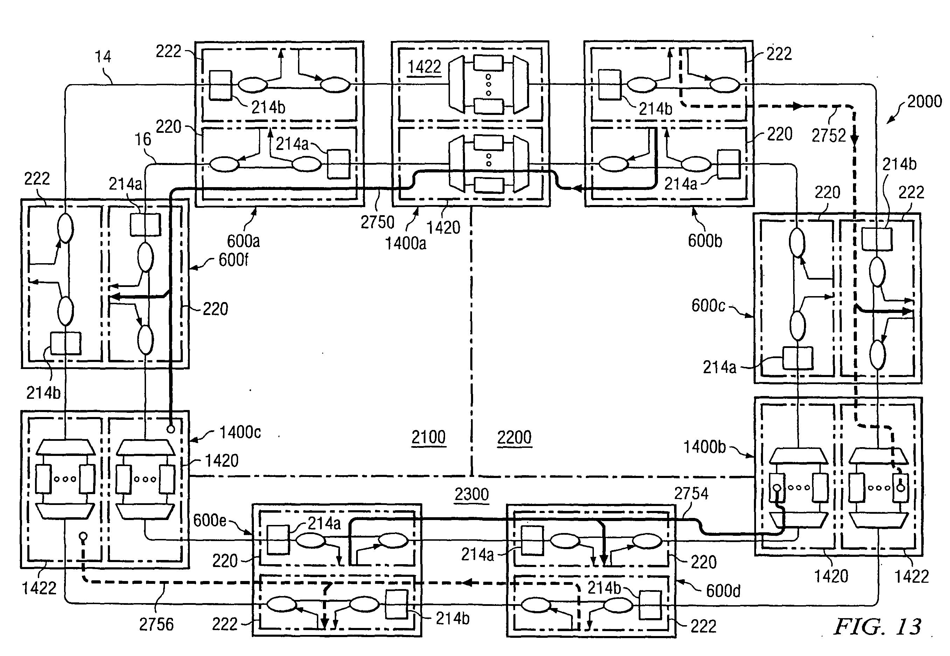

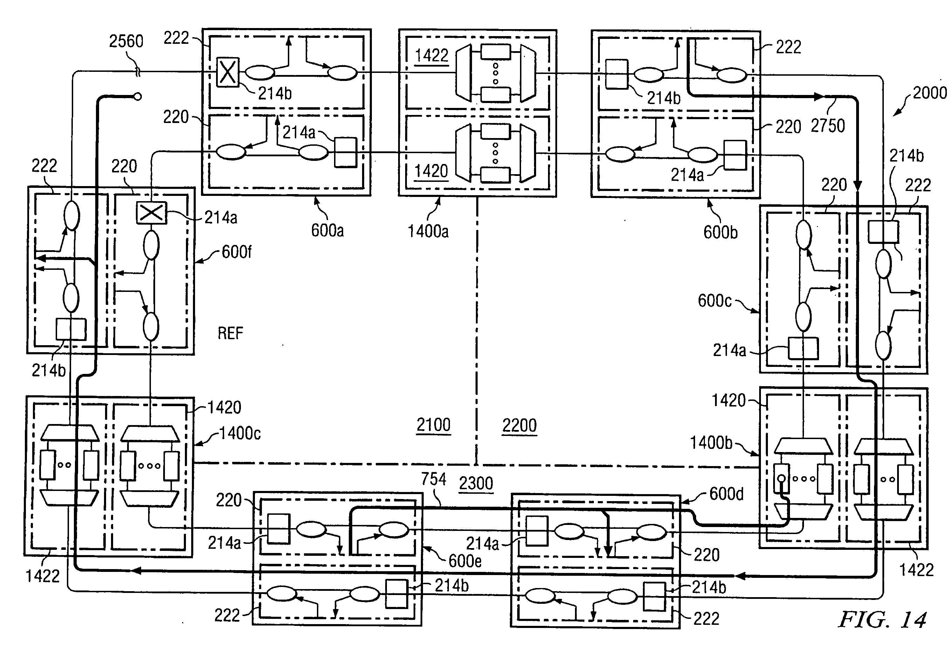

For purposes of protection switching, switch 660 is operable such that a given receiver at a destination ADN during normal operations that receives an optical signal from a first ring may, during protection switching, receive that signal from the second ring. Further details regarding protection switching is described in reference to FIGURES 13 and 14.

In certain embodiment, DCE 550 comprises two separate or separable combining elements, each of which receive traffic from a different fiber or direction. DCE 550 comprises a clockwise amplified combiner 552 and a counterclockwise amplified combiner 554. Clockwise amplified combiner 552 comprises amplifier 326, as described above in reference to FIGURE 2, and splitter 556 with a plurality of optical fiber add leads 562. Counterclockwise amplified combiner 554 comprises amplifier 328, as described above in reference to FIGURE 2, and splitter 558 with a plurality of optical fiber add leads 564.

Optical senders 270, described above in reference to FIGURE 2, may be associated with a local client and are each coupled to one of a plurality of switches 560. Switches 560 are operable to forward traffic to either clockwise amplified combiner 552 or to counterclockwise amplified combiner 554. Each traffic stream may be associated with a dedicated transmitter. Because traffic streams may be directed to one of two ring directions, two different traffic streams may, in one embodiment, be transmitted on the same wavelength but in different directions.

In operation, an optical signal may be transmitted from optical sender 270 to switch 560, forwarded by switch 560 to one of combiner 552 or combiner 554, combined with other signals, amplified, and forwarded to clockwise ring 14 via lead 306 or to counterclockwise ring 16 via lead 302. For purposes of protection switching, optical signals may be either terminated at optical sender 270 or the direction of the optical signal changed via switch 560.

Similar to the protection switching and lightpath protection network 10, as illustrated in FIGURE 4, network 20 contains elements that allow for protection switching and lightpath protection. Therefore, similar to network 10, network 20 may be upgraded while in service without disrupting traffic in the network. Similar to the discussion above, a ring cut, or other interruption of traffic, will not prevent any ADN 600 in network 20 from receiving traffic. Therefore, network maintenance or upgrade procedures that require a ring to be cut will not cause a disruption in the traffic flow on the network. For example, network 20 may be upgraded to an optical ring network having multiple optical subnets (the configuration of network 2000 of FIGURE 12, discussed below with reference to FIGURES 12-4) by cutting rings 14 and 16 of network 20 in the appropriate locations and inserting three network gateways. For example, rings 14 and 16 may be cut in one location between the appropriate ADNs 600 and gateway 1400a may be inserted and connected to the network. While the rings are cut, the network provides protection switching similar to that illustrated in FIGURE 4. In this manner, the network stays in service, as traffic is able to flow to around the network, while the network is being upgraded.

Next, rings 14 and 16 may be cut in another location between the appropriate ADNs 600 and gateway 1400b may be inserted and connected to the network. Similarly, rings 14 and 16 may be cut in yet another location between the appropriate ADNs 600 and gateway 1400c may be inserted and connected to the network. Although network 2000 is illustrated has having three gateways, and therefore, three subnets, any appropriate number of gateways/subnets may be used.

FIGURE 12 is a block diagram illustrating an example optical network 2000 with three subnets, instead of the two subnet network 1000 of FIGURE 5. It will be understood that the present invention, as shown in FIGURES 12 - 14, may be utilized in networks with two, three, or more subnets.

Referring to FIGURE 12, the network 2000 includes a first fiber optic ring 14 and a second fiber optic ring 16 connecting a plurality of ADNs 600 and optical wavelength reuse gateways 1400. FIGURE 12 shows six ADNs 600, but any number of ADNs 600 may be appropriate based on the particular circumstances. For example, FIGURE 12 shows two ADNs per subnet (for a total of six ADNs) while FIGURE 5 shows two ADNs per subnet (for a total of four ADNs). As with the network 10 of FIGURE 1, network 2000 is an optical network in which a number of optical channels are carried over a common path at disparate wavelengths, may be an wavelength division multiplexing (WDM), dense wavelength division multiplexing (DWDM), or other suitable multi-channel network, and may be used in a short-haul metropolitan network, and long-haul inter-city network or any other suitable network or combination of networks.

In network 2000, also as in network 10 of FIGURE 1 and network 1000 of FIGURE 5, optical information signals are transmitted in different directions on the rings 14 and 16 to provide fault tolerance. In the illustrated embodiment, the first ring 14 is a clockwise ring in which traffic is transmitted in a clockwise direction. The second ring 16 is a counterclockwise ring in which traffic is transmitted in a counterclockwise direction. The ADNs 600 are similar to the ADNs 201 of FIGURE 2 in that each are operable to add and drop traffic to and from the rings 14 and 16 and comprise transport elements 220 and 222, and a managing element 228. However, in one embodiment, in place of combining element 226 in ADNs 201 is a divided combining element (DCE). A DCE, described previously in reference to FIGURE 11, may be provisioned to forward a first specified subset of the total channels originating from the ADN 600 to first ring 14 and a second specified subset of the total channels to the second ring 16. Switches in the DCE may allow for a particular traffic stream to be selectively forwarded to a different ring during protection switching. Also, in one embodiment, in place of distributing element 224 in ADNs 201 is a divided distributing element (DDE). A DDE, described previously in reference to FIGURE 11, may be provisioned to receive traffic from ring 14 in a first subset of receivers, and traffic from ring 16 in a second subset of receivers. Whereas in the embodiment shown in FIGURE 2 the combining element forwards traffic to both rings simultaneously and each receiver of the distributing element receives traffic from both rings, in the DDE/DCE embodiments, individual traffic channels may be forwarded to the clockwise ring or to the counterclockwise ring by the DCE, and received by the DDE from the clockwise ring or from the counterclockwise ring. During protection switching, the DCE switches from forwarding a particular channel from one ring to the other. In this way, the DDE/DCE equipped ADNs 600 allow for three or more protection-switchable subnets.

In particular embodiments, network 2000 may carry 40 channels, with the odd-numbered channels comprising channels λ₁, λ₃, λ₅, λ₇, etc., through λ₃₉ and the even numbered channels comprising channels λ_{*2*}*,* λ₄,λ₆, *λ*₈*,* etc., through λ₄₀. In accordance with this embodiment, the DCE may be provisioned to, during normal operations, forward higher priority traffic in odd-numbered channels to clockwise ring 14 and in even-numbered channels to counterclockwise ring 16. Lower-priority, terminable traffic may be forwarded by the DCE in even-numbered channels to clockwise ring 14 and in odd-numbered channels to counterclockwise ring 16. In the event of a ring cut or other interruption, and as described further below in reference to FIGURES 13 and 14, the DCE may switch interrupted high priority traffic to the other direction on the other ring.

Similar to ADNs 201 of FIGURE 2, each ADN 600 receives traffic from the rings 14 and 16 and drops traffic destined for the local clients. In adding and dropping traffic, the ADNs 600 may multiplex data from clients for transmittal in the rings 14 and 16 and may demultiplex channels of data from the rings 14 and 16 for clients. Traffic may be dropped by making the traffic available for transmission to the local clients. Thus, traffic may be dropped and yet continue to circulate on a ring. Again, similar to ADNs 201 of FIGURE 2, the transport elements of the ADNs 600 communicate the received traffic on the rings 14 and 16 regardless of the channel spacing of the traffic - thus providing "flexible" channel spacing in the ADNs 600.

Rings 14 and 16 and the ADNs 600 are subdivided into subnets 2100, 2200, and 2300, with the gateways 1400 forming the subnet boundaries. The gateways may comprise gateways 1400 of FIGURE 6 or other suitable gateways. During protection switching, as described in further detail below in reference to FIGURES 13 and 14, the gateways 1400 may be reconfigured to allow protected traffic to pass through.

As described with the network 10 of FIGURE 1, each ring 14 and 16 is open at least one point for each channel, and the rings 14 and 16 may, in response to a ring cut or other interruption, be provisioned to terminate in ADNs 600 adjacent to the interruption using 2x2 switches in ADNs 600. As with network 10, network 1000 may comprise both intra-subnet traffic and inter-subnet traffic.

In accordance with the embodiments shown in FIGURES 12-14, it may be possible to increase the capacity of a network by up to twice the number of gateways in the network. For example, a three-subnet network as illustrated in FIGURE 12 with three gateways may have a capacity of up to six times the capacity of a network without such a subnet configuration. A four-subnet network with four gateways may have a capacity of up to eight times the capacity of a network without such a subnet configuration.

FIGURE 13 is a block diagram illustrating lightpaths of optical signals of the optical network of FIGURE 12. For ease of reference, only high-level details of the transport elements of ADNs 600 and gateways 1400 are shown. In addition, ADNs 600 are assigned individual reference numbers, with ADNs 600a and 600f within subnet 2100, ADNs 600b and 600c within subnet 2200, and ADNs 600d and 600e within subnet 2300. Gateways 1400, forming the boundary between subnets 2100, 2200, and 2300 are also assigned individual reference numbers 1400a, 1400b and 1400c.

In the illustrated embodiment, four traffic streams are shown. Traffic stream 2750 is a counterclockwise stream originating from ADN 600b and destined for ADN 600f. Traffic stream 2752 is a clockwise stream originating from ADN 600b and destined for ADN 600c. Traffic stream 2754 is a counterclockwise stream originating from ADN 600e and destined for ADN 600d. Traffic stream 2756 is a clockwise stream originating from ADN 600d and destined for ADN 600e. Traffic streams 2752 and 2756 terminate at gateway 1400c at an open switch in clockwise transport segment 1422 corresponding to the channel of the traffic streams. Traffic streams 2750 and 2752 terminate at gateway 1400c at the open switch in the counterclockwise transport segment 1420 corresponding to the channel of the traffic stream. Traffic streams 2750, 2752, 2754, and 2756 are carried on the same channel or wavelength; however, the streams are transmitted from a separate optical sender within the DCEs of their respective origination ADNs.

In the illustrated embodiment, during normal operations, protectable traffic is forwarded in clockwise ring 14 in odd-numbered channels and in even-numbered channels to counterclockwise ring 16. Terminable traffic may be forwarded in clockwise ring 14 in even-numbered channels and in odd-numbered channels to counterclockwise ring 16. Each of the traffic streams 2750, 2752, 2754, and 2756 is carried on the same, even-numbered channel ("Channel A"). Channel A may comprise λ₂ or another even-numbered channel. Thus, traffic streams 2750 and 2754 are on working paths and may represent higher-priority traffic streams for which a customer has paid a premium, and streams 2752 and 2756 may represent lower-priority priority on protection paths for which a customer has paid a lower cost. As shown in FIGURE 14, streams 2752 and 2756 may be interrupted during protection switching to protect a higher-priority stream.

FIGURE 14 is a block diagram illustrating protection switching and lightpath protection of the traffic stream 2750 of FIGURE 12. In the event of a ring cut or other interruption, an alternate lightpath is created for protectable channels that are prevented from reaching all of their destination ADNs due to the interruption. If the alternate line path would result in interference from traffic in the same channel from other ADNs in other subnets, the DCE 550 in the interfering ADN may terminate that traffic. As previously noted, it will be understood that other divisions of traffic besides odd and even and other conventions may be utilized without departing from the scope present invention.

In the illustrated example, the ring cut 2560 prevents traffic stream 2750 from reaching all of its destination ADNs in the path shown on FIGURE 13. Pursuant to the protection switching protocol of this embodiment, first, traffic streams 2752 and 2756 are terminated. Then, the DCE of ADN 600b switches traffic stream 2750 from a counterclockwise to a clockwise direction. Traffic streams 2752 and 2756 are terminated, and the 2x2 switches in gateways 1400b and 1400c corresponding to Channel A are closed to allow Channel A to pass through. In this way, an alternate path for stream 2750 from ADN 600b to ADN 600f is created with no interference from other traffic streams on Channel A.

In order to ensure an opening in the rings 14 and 16 during protection switching, switch 214a in the transport element 220 of ADN 600f and switch 214b in the transport element 222 of ADN 600a are opened. In this way, channel interference is prevented, for example, if the ring cut 2560 only affects one ring, or during repair operations.

After repair of the ring cut, the network is reverted to its pre-protection switching state shown in FIGURE 13. Specifically, the switches in gateways 1400c and 1400b corresponding to Channel A are opened and the switches 214 in ADN 600f and ADN 600a are closed. Traffic stream 2750 is reverted to a counterclockwise direction, and traffic streams 2752 and 2756 may restart.

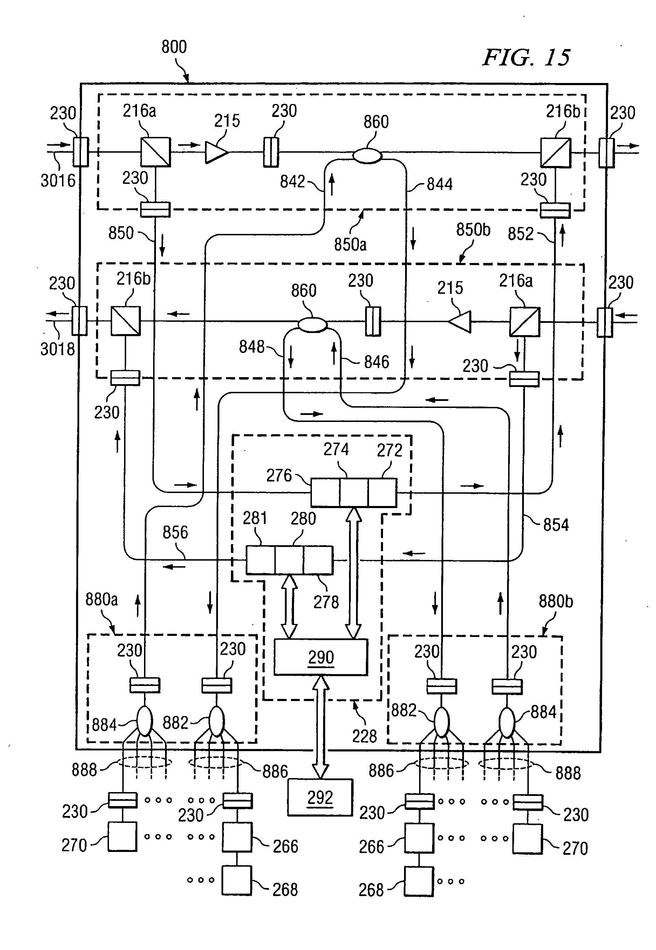

FIGURE 15 is a block diagram illustrating details of ADN 800, another example embodiment of ADN 201 of FIGURE 1. ADNs 800 allow for both OUPSR and OSPPR communication within a network. ADN 800 comprises counterclockwise transport element 850a, clockwise transport element 850b, counterclockwise distributing/combining element 880a, clockwise distributing/combining element 880b, and managing element 228. In one embodiment, the elements 850, 880, and 228, as well as components within the elements may be interconnected with optical fiber links. In other embodiments, the components may be implemented in part or otherwise with planar waveguide circuits and/or free space optics. Any other suitable connections may alternatively be used. In addition, the elements of ADN 800 may each be implemented as one or more discrete cards within a card shelf of the ADN 800. Exemplary connectors 230 for a card shelf embodiment are illustrated. Connectors 230 may allow efficient and cost effective replacement of failed components. It will be understood that additional, different and/or other connectors may be provided as part of the ADN 800.

Transport elements 850 are positioned "in-line" on rings 3016 and 3018. Transport elements 850 may comprise either a single add/drop coupler 860 or a plurality of add/drop couplers 860 which allow for the passive adding and dropping of traffic. In the illustrated embodiment, transport elements 850 each include a single add/drop coupler 860. Alternatively, a separate drop coupler and add coupler can be so that if one of the couplers fail, the other coupler can still add or drop. Although couplers 860 are described, any other suitable optical splitters may be used. For the purposes of this description and the following claims, the terms "coupler," "splitter," and "combiner" should each be understood to include any device which receives one or more input optical signals, and either splits or combines the input optical signal(s) into one or more output optical signals. The transport elements 850 further comprise OSC filters 216 at the ingress and egress edges of each element, and an amplifier 215 between the ingress OSC filter 216a and the egress OSC filter 216b. Amplifiers 215 may comprise an Erbium-doped fiber amplifier (EDFA) or other suitable amplifier. OSC filters 216 may comprise thin film type, fiber grating or other suitable type filters.

Distributing/combining elements 880 may each comprise a drop signal splitter 882 and an add signal combiner 884. Splitters 882 may comprise a coupler with one optical fiber ingress lead and a plurality of optical fiber egress leads which serve as drop leads 886. The drop leads 886 may be connected to one or more filters 266 which in turn may be connected to one or more drop optical receivers 268. In particular embodiments in which four drop leads 886 are implemented, splitters 882 may each comprise a 2x4 optical coupler, where one ingress lead is terminated, the other ingress lead is coupled to a coupler 860 via a fiber segment, and the four egress leads are used as the drop leads 886. Although the illustrated embodiment shows four drop leads 886, it should be understood that any appropriate number of drop leads 886 may implemented, as described in further detail below.

Combiners 884 similarly may comprise a coupler with multiple optical fiber ingress leads, which serve as add leads 888, and one optical fiber egress lead. The add leads 888 may be connected to one or more add optical senders 270. In particular embodiments in which four add leads 888 are implemented, combiners 884 may each comprise a 2x4 optical coupler, where one ingress lead is terminated, the other ingress lead is coupled to a coupler via a fiber segment, and the four egress leads are used as the add leads 888. Although the illustrated embodiment shows four add leads 888, it should be understood that any appropriate number of add leads 888 may implemented, as described in further detail below. The ADN 800 further comprises counterclockwise add fiber segment 842, counterclockwise drop fiber segment 844, clockwise add fiber segment 846, clockwise drop fiber segment 848, which connect the couplers 860 to splitters 882 and combiners 884.

Managing element 228 may comprise OSC receivers 276 and 278, OSC interfaces 274 and 280, OSC transmitters 272 and 281, and an element management system (EMS) 290. ADN 800 also comprises OSC fiber segments 850, 852, 854, and 856, that connect managing element 228 to ingress and egress OSC filters 216. Each OSC receiver 276 and 278, OSC interface 274 and 280, and OSC transmitter 272 and 281 set forms an OSC unit for one of the rings 14 or 16 in the ADN 800. The OSC units receive and transmit OSC signals for the EMS 290. The EMS 290 may be communicably coupled to a network management system (NMS) 292. NMS 292 may reside within ADN 800, in a different ADN, or external to all of the ADNs 800.

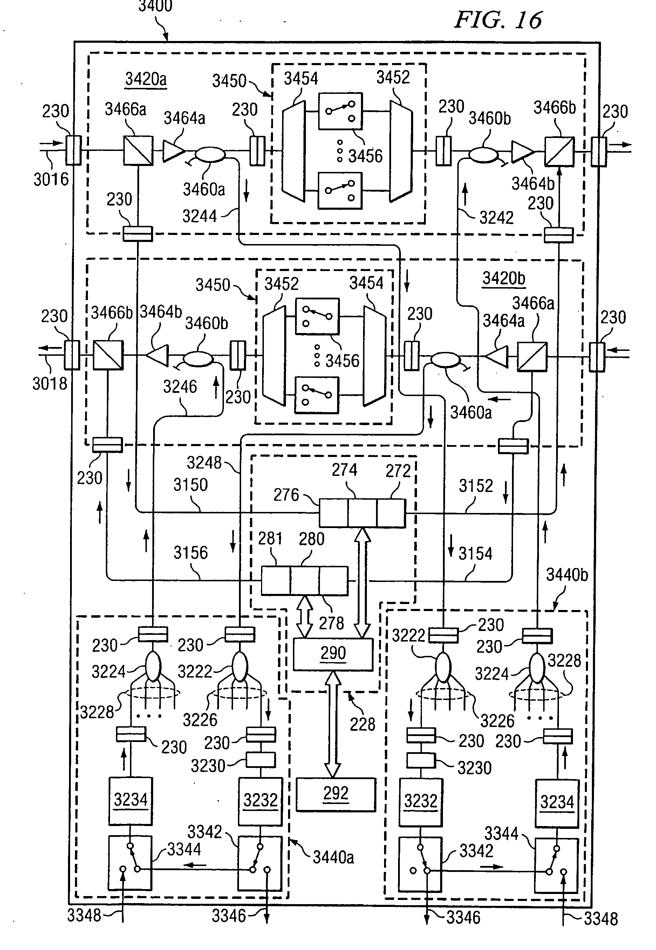

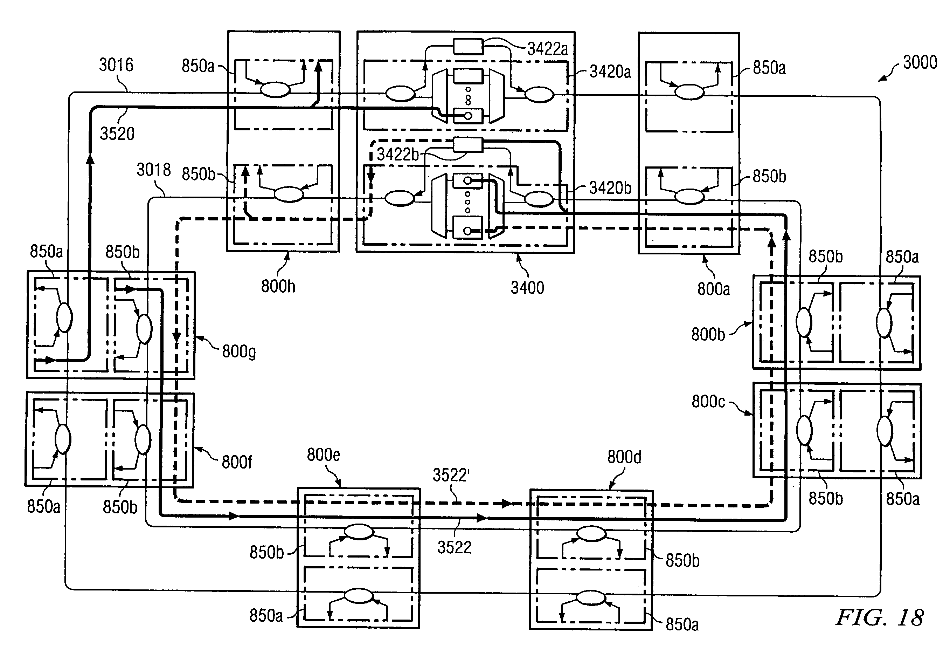

EMS 290 and/or NMS 292 may comprise logic encoded in media for performing network and/or ADN monitoring, failure detection, protection switching and loop back or localized testing functionality of the network 3000 of FIGURE 17. Referring to FIGURE 15, logic may comprise software encoded in a disk or other computer-readable medium and/or instructions encoded in an application-specific integrated circuit (ASIC), field programmable gate array (FPGA), or other processor or hardware. It will be understood that functionality of EMS 290 and/or NMS 292 may be performed by other components of the network and/or be otherwise distributed or centralized. For example, operation of NMS 292 may be distributed to the EMS 290 of ADNs 800 and/or gateways 3400 of FIGURE 16, and the NMS 292 may thus be omitted as a separate, discrete element. Similarly, the OSC units may communicate directly with NMS 292 and EMS 290 omitted.

In operation, the transport elements 850 are operable to add traffic to rings 3016 and 3018 and to passively drop traffic from rings 3016 and 3018. The transport elements 850 are further operable to passively add and drop the OSC signal to and from rings 3016 and 3018. More specifically, each OSC ingress filter 216a processes an ingress optical signal from its respective ring 3016 or 3018. OSC filters 216a filters the OSC signal from the optical signal and forwards the OSC signal to its respective OSC receiver 812. Each OSC filter 216a also forwards or lets pass the remaining transport optical signal to the associated amplifier 215. Amplifier 215 amplifies the signal and forwards the signal to its associated coupler 860.

Each coupler 860 passively splits the signal from the amplifier 215 into two replica signals: a through-signal, that is forwarded to egress OSC filter 216b (after being combined with add traffic, as described below), and a drop-signal that is forwarded to the associated distributing/combining element 880. The split signals are copies in that they are identical or substantially identical in content, although power and/or energy levels may differ. Each coupler 860 passively combines the through signal with an add signal comprising add traffic from the associated distributing/combining element 880. The combined signal is forwarded from the coupler 860 to its associated OSC egress filter 216b. Couplers 860 work for both adding and dropping, so they are very low-loss and simple. If a failure occurs in a coupler 860, the replacement of the coupler affects both adding and dropping. To avoid this, a drop coupler and an add coupler can be cascaded instead of using a single coupler 860.

Each OSC egress filter 216b adds an OSC signal from the associated OSC transmitter 272 or 281 to the combined optical signal and forwards the new combined signal as an egress transport signal to the associated ring 3016 or 3018 of network 3000. The added OSC signal may be locally generated data or may be received OSC data forwarded through by the EMS 290.

Prior to being forwarded to couplers 860, locally-derived add traffic (from local clients or subscribers, from another network, or from any other appropriate source) is received at a distributing/combining element 880 from one or more of the optical transmitters 270. One or more of the optical transmitters 270 may include one or more components for adjusting the optical output power from the transmitter 270, such as a manual variable optical attenuator. Traffic to be added to ring 3018 is received at distributing/combining element 880a and traffic to be added to ring 3016 is received at distributing/combining element 880b. These received signals are able to be used as monitors. A separate optical transmitter 270 may be used for each wavelength/channel in which traffic is to be added at an ADN 800. Furthermore, each add lead 888 may be associated with a different wavelength/channel. Therefore, there may be a transmitter 270 and add lead 888 combination for each separate channel in which traffic is desired to be added at a particular ADN 800. Although four add leads 888 for each ring 3016 and 3018 are illustrated (although four transmitters 270 are not explicitly illustrated), it will be understood that any appropriate number of optical transmitters 270 and associated add leads 888 may be used.

Add traffic from one or more transmitters 270 associated with a particular distributing/combining element 880 is received at the associated combiner 884. The combiner 884 combines the signals from multiple transmitters 270 (if applicable) and forwards the combined add signal to the associated coupler 860 for addition to the associated ring 3016 or 3018. As described above, this add traffic is then combined with forwarded traffic at coupler 860. Combiner 884 may be a coupler, a multiplexer, or any other suitable device.

In the illustrated embodiment, separate optical transmitters 270 are described as being associated with each distributing/combining element 880. In such an embodiment, different signals may be communicated over each ring 3016 and 3018. For example, a first signal can be added in a particular channel/wavelength on ring 16 at a ADN 800, and an entirely different signal can be added in the same channel/wavelength on ring 14 by the same ADN 800. This is possible since each channel/wavelength has an associated optical transmitter 270 at each distributing/combining element 880. As described below, such a feature is useful when providing an OSPPR network, among other reasons.

However, as described in further detail below, when providing an OUPSR network, the same traffic is typically added from an ADN 800 on both rings 14 and 16. This duplicate traffic is used to provide fault protection. In such embodiments, two different sets of optical transmitters 270 are not required. Instead, distributing/combining elements 880a and 880b can share a set of transmitters 270. In such a case, the add signals generated by a particular optical transmitter 270 (add signals in a particular channel/wavelength) may be communicated to the combiner 884 of both distributing/combining element 880a and distributing/combining element 880b. Thus, the same traffic is added to rings 3016 and 3018 by the ADN 800.

As described above, locally-destined traffic on a ring 3016 or 3018 is dropped to the associated distributing/combining element 880 using coupler 860. The drop traffic is received at the splitter 882 of the distributing/combining element 880, and the splitter 882 splits the dropped signal into multiple generally identical signals and forwards each signal to an optical receiver 268 via a drop lead 886. In particular embodiments, the signal received by optical receivers 268 may first be filtered by an associated filter 266. Filters 266 may be implemented such that each filter allows a different channel to be forwarded to its associated receiver 268. Filters 266 may be tunable filters (such as an acousto-optic tunable filter) or other suitable filters, and receivers 268 may be broadband receivers or other suitable receivers. Such a configuration allows each receiver 268 associated with a particular ring 3016 or 3018 to receive a different wavelength, and to forward the information transmitted in that wavelength to appropriate clients. A dropped optical signal passing through a filter 266 is able to be optically forwarded to a client without signal regeneration if the signal does not require such regeneration.

As mentioned above, ADN 800 also provides an element management system. EMS 290 monitors and/or controls all elements in the ADN 800. In particular, EMS 290 receives an OSC signal from each ring 3016 and 3018 in an electrical format via an OSC receiver 276 or 278 associated with that ring (the OSC receiver 276 or 278 obtains the signal via an OSC filter 216a). EMS 290 may process the signal, forward the signal and/or loop-back the signal. Thus, for example, the EMS 290 is operable to receive the electrical signal and resend the OSC signal via OSC transmitter 272 or 281 and OSC filter 216b to the next ADN on the ring 3016 or 3018, adding, if appropriate, ADN-specific error information or other suitable information to the OSC.

In one embodiment, each element in an ADN 800 monitors itself and generates an alarm signal to the EMS 290 when a failure or other problem occurs. For example, EMS 290 in ADN 800 may receive one or more of various kinds of alarms from the elements and components in the ADN 800: an amplifier loss-of-light (LOL) alarm, an amplifier equipment alarm, an optical receiver equipment alarm, optical transmitter equipment alarm, or other alarms. Some failures may produce multiple alarms. For example, a ring cut produces amplifier LOL alarms at adjacent ADNs and also error alarms from the optical receivers. In addition, the EMS 290 may monitor the wavelength and/or power of the optical signal within the ADN 800 using an optical spectrum analyzer (OSA) communicably connected to appropriate fiber segments within ADN 800 and to EMS 290.

The NMS 292 collects error information from all of the ADNs 800 (and gateway 3400 of FIGURES 16 and 17) and is operable to analyze the alarms and determine the type and/or location of a failure. Based on the failure type and/or location, the NMS 292 determines needed protection switching actions for the network 3000, discussed below in reference to FIGURE 17. The protection switch actions may be carried out by NMS 292 by issuing instructions to the EMS in the ADNs 800 (and gateways 3400).

Error messages may indicate equipment failures that may be rectified by replacing the failed equipment. For example, a failure of an optical receiver or transmitter may trigger an optical receiver equipment alarm or an optical transmitter equipment alarm, respectively, and the optical receiver or transmitter replaced as necessary.

Although a passive ADN 800 has been described, in particular embodiments network 3000, discussed below in reference to FIGURE 17, may include active ADNs, passive ADNs, or a combination of active and passive ADNs. ADNs may be passive in that they include no optical switches, switchable amplifiers, or other active devices. ADNs may be active in that they include optical switches, switchable amplifiers, or other active devices in the transport elements or otherwise in the ADN. Passive ADNs may be of a simpler and less expensive design.

Referring to FIGURE 16, gateway 3400 includes a counterclockwise transport element 3420a and a clockwise transport element 3420b. Transport elements 3420 each comprise a multiplexer/demultiplexer (mux/demux) unit 3450. Mux/demux units 3450 may each comprise a demultiplexer 3454, a multiplexer 3452, and switch elements which may comprise an array of switches 3456 or other components operable to selectively forward or terminate a traffic channel (or group of channels). In a particular embodiment, multiplexers 3452 and demultiplexers 3454 may comprise arrayed waveguides. In another embodiment, the multiplexers 3452 and the demultiplexers 3454 may comprise fiber Bragg gratings, thin-film-based sub-band (a group of wavelengths/channels which are a sub-set of the total wavelengths/channels available) multiplexers/demultiplexers, or any other suitable devices. If a mux/demux unit 3450 consists of sub-band mux/demux, the unit 3450 is operable to block or forward sub-bands. The switches 3456 may comprise 1x2 or other suitable switches, optical cross-connects, or other suitable components operable to selectively forward or terminate the demultiplexed traffic channels. Mux/demux units 3450 may alternatively comprise any other components that are collectively operable to selectively block or forward individual channels or groups of channels.

Similarly to ADNs 800, gateway transport elements 3420 also include couplers 3460, amplifiers 3464, OSC filters 3466, and connectors 230. In the illustrated embodiment, a coupler 3460a is positioned prior to each mux/demux unit 3450 and a coupler 3460b is positioned after each mux/demux unit 3450. Coupler 3460a passively splits the signal from a pre-amplifier 3464a into two generally identical signals: an through signal that is forwarded to mux/demux unit 3450, and a drop signal that is forwarded to an associated signal regeneration element 3440. The split signals may be substantially identical in content, although power levels may differ. Coupler 3460b passively combines a signal from mux/demux unit 3450 with a signal from the respective signal regeneration element 3440. The combined signal is forwarded from the coupler 3460b to a post-amplifier 3464b.

The transport elements 3420 are further operable to passively add and drop an OSC signal to and from rings 3016 and 3018, as with transport elements 850 of ADNs 800. More specifically, each transport element 3420 includes an OSC ingress filter 3466a that processes an ingress optical signal from its respective ring 3016 or 3018. Each OSC filter 3466a filters the OSC signal from the optical signal and forward the OSC signal to a respective OSC receiver 278. Each OSC filter 3466a also forwards or lets pass the remaining transport optical signal to the associated pre-amplifier 3464a. Pre-amplifier 3464a amplifies the signal and forwards the signal to its associated coupler 3460a.

Transport elements 3420 also each include an OSC egress filter 3466b that adds an OSC signal from an associated OSC transmitter 272 or 281 to the optical signal from post-amp 3464b and forwards the combined signal as an egress transport signal to the associated ring 3016 or 3018 of network 3000 (FIGURE 17). The added OSC signal may be locally generated data or may be received OSC data passed through by the local EMS 290.

Signal regeneration elements 3440 each include a splitter 3222 and a combiner 3224. As with splitters 882 of ADN 800, splitters 3222 may comprise a coupler with one optical fiber ingress lead and a plurality of optical fiber egress leads which serve as drop leads 3226. One or more of the drop leads 3226 may each be connected to a filter 3230, which in turn may be connected to an optical transponder 3232. Combiners 3224 similarly may comprise a coupler with one optical fiber egress lead and a plurality of optical fiber ingress leads which serve as add leads 3228. One or more of the add leads 3228 may each be connected to an optical transponder 3234. One or more of the optical transmitters 3234 may include one or more components for adjusting the optical output power from the transmitter 3234, such as a manual variable optical attenuator. Transponders 3232 and 3234 may be coupled though switches 3242 and 3244.

Switch 3242 is operable to communicate an electrical signal from transponder 3232 to either switch 3244 or to a local client or other destination coupled to switch 3242 for receiving dropped traffic (the drop traffic illustrated by arrow 3246). Switch 3244 may be operated to either receive signals from switch 3242 or from a destination that is adding optical traffic (the add traffic illustrated by arrow 3248). Therefore, a signal from transponder 3232 may either be dropped to an appropriate destination or it may be communicated to transponder 3234 (for example, for wavelength conversion and communication back to ring 3014 or 3016). In this way, gateway 3400 can be configured, for each wavelength received by a transponder 3232, to either regenerate (and possibly wavelength convert) the signal in that wavelength or to drop the signal in that wavelength to an appropriate destination. In other embodiments, a dropped signal may be optically forwarded to a local client without being regenerated (the signal can be forwarded directly from filter 3230 to the client without being forwarded through transponder 3232).

Although the illustrated embodiment shows four drop leads 3226 and four add leads 3228, it should be understood that any appropriate number of drop leads 3226 and add leads 3228 may be implemented, as described in further detail below. Gateway 3400 further comprises counterclockwise add fiber segment 3242, counterclockwise drop fiber segment 3244, clockwise add fiber segment 3246, and clockwise drop fiber segment 3248, which connect the couplers 3460a and 3460b to splitters 3222 and combiners 3224.

Similar to ADNs 800, gateway 3400 comprises a management element 228 comprising OSC receivers 276 and 278, OSC interfaces 274 and 280, OSC transmitters 276 and 281, and an EMS 290 (which is coupled to NMS 292), as described above with reference to FIGURE 15. The EMS 228 is connected to transport elements 3420 via OSC fiber segments 3150, 3152, 3154, and 3156.

In operation, each transport element 3420 receives an optical signal, comprising a plurality of channels, from its respective ring 3016 or 3018. OSC filter 3466a filters the OSC signal from the optical signal as described above and the remaining optical signal is forwarded to amplifier 3464a, which amplifies the signal and forwards it to coupler 3460a. Coupler 3460a passively splits the signal from the amplifier 3464 into two generally identical signals: a through signal that is forwarded to mux/demux unit 3450, and a drop signal that is forwarded to the associated signal regeneration element 3440. The split signals may be substantially identical in content, although power levels may differ.

Demultiplexer 3454 of mux/demux unit 3450 receives the optical signal from coupler 3460a and demultiplexes the signal into its constituent channels. Switches 3456 selectively terminate or forward each channel to multiplexer 3452. As described below, channels may be selectively terminated or forwarded to implement subnets and associated protection schemes. The channels that are forwarded by switches 3456 are received by multiplexer 3452, which multiplexes the received channels into a WDM optical signal and forwards the optical signal to coupler 3460b.

Splitter 3222 of signal regeneration element 3440 also receives the optical signal from coupler 3460a. Splitter 3222 splits the dropped signal into multiple generally identical signals. One or more of the these signals are each forwarded to an optical filter 3230 via a drop lead 3226. Each drop lead 3226 may have an associated filter 3230 which allows only a particular wavelength/channel (or group of wavelengths/channels) to forward. Filters 3230 may be implemented such that each filter allows a different channel (a filtered channel) to forward to an associated transponder 3232. Such a configuration allows each transponder 3232 that is associated with a particular signal regeneration element 3440 to receive a different wavelength. This, in turn, allows selected wavelengths to be forwarded to a transponder 3232, and allows each such filtered wavelength to be dealt with differently, if appropriate.

Transponders 3232 may include a receiver that receives an optical signal and converts the optical signal into an electrical signal. Each transponder also may include a transmitter that may convert the electrical signal back into an optical signal. Such an optical-electrical-optical (OEO) conversion of an optical signal regenerates, retimes, and reshapes the signal. Alternatively, transponders 3232 and 3234 may be replaced by a single receiver and a single transmitter, respectively, where a received signal is electrically communicated from the receiver to the transmitter. Regeneration may be needed or desired when an optical signal must travel a relatively long distance from origin ADN to destination ADN. Since the power of the signal decreases as it travels over ring 3016 or 3018, signal regeneration is needed if the distance of travel is great enough to degrade a signal to the point that it is unusable or undesirable. As an example only, in a typical metropolitan network, signal regeneration may be desired after a signal has traveled approximately one hundred kilometers.

In the illustrated embodiment, the regenerated electrical signal is forwarded from transponder 3232 to a switch 3342. Switch 3342 may selectively drop the signal (dropped signal 3346) coming from the associated transponder 3232, as discussed above, or it may forward the signal to switch 3344. Switch 3344 may be operated, as discussed above, to receive traffic from switch 3342 or from a destination that is adding optical traffic (added signal 3348) and to communicate those signals to transponders 3234. Transponders 3234 may include a receiver and a transmitter, and signals forwarded to a transponder 3234 go through an optical-electrical-optical conversion, as with transponders 3232. In particular embodiments, transponders 3234 include a transmitter that may change the wavelength/channel in which a signal is transmitted. Particular uses of such wavelength conversion are described in further detail below.

Although transponder "sets" (transponder 3232 and transponder 3234) are illustrated, some embodiments may replace each such set with a single transponder. Such a single transponder may perform both signal regeneration and wavelength conversion. Furthermore, any number of drop leads 3226 and add leads 3228 and associated transponders 3232 and 3234 may be used. The number of such leads and transponder sets (or single transponders) may vary depending on the number of wavelengths/channels of the optical signals being communicated over rings 3016 and 3018 on which regeneration or wavelength conversion are to be performed.

After performing regeneration and/or wavelength conversion on selected wavelengths/channels, such wavelengths/channels are communicated from the transponders 3234 of a particular signal regeneration element 3440 via add leads 3228 to the combiner 3224 of that signal regeneration element 3440. Combiner 3224 combines different wavelengths/channels from transponders 3234 and forwards the combined optical signal to coupler 3460b of the associated transport element 3420.

Coupler 3460b passively combines the optical signal from the associated mux/demux unit 3450 with the optical signal from the associated signal regeneration element 3440. The combined signal is forwarded from the coupler 3460b to the associated post-amplifier 3464b, where the combined optical signal is amplified. The amplified optical signal is then forwarded to OSC egress filter 3466b, which adds an OSC signal from the associated OSC transmitter 272 or 281 to the combined optical signal and forwards the new combined signal as an egress transport signal to the associated ring 3016 or 3018 of network 3000. The added OSC signal may be locally generated data or may be received OSC data forwarded through by the EMS 290.

The combination of couplers 3460a and 3460b, mux/demux unit 3450, and signal regeneration element 3440 in gateway 3450 for each ring 3016 and 3018 provide for flexible treatment of optical traffic arriving at gateway 3450 on rings 3016 and 3018. For example, particular wavelengths/channels of the traffic may be forwarded through mux/demux unit 3450, such that no regeneration or wavelength conversion occurs. These same wavelengths will typically be filtered out of the optical signals dropped to signal regeneration elements 3440 from couplers 3460a. Other wavelengths are each allowed to forward through one of the filters 3230 of a signal regeneration element 3440 and may thus be regenerated and/or converted to another wavelength. These wavelengths that are forwarded to a transponder 3232 are typically terminated by an associated switch 3456 of mux/demux unit 3450. Therefore, each wavelength of an optical signal entering gateway 3400 may be: 1) optically passed through, 2) optically terminated (to separate an optical subnet domain from other such domains), 3) regenerated without wavelength conversion, or 4) regenerated with some degree of wavelength conversion. EMS 228 may configure mux/demux units 3450 and signal regeneration element 3440 to perform one of these options on each wavelength to provide for subnets, protection switching, and other suitable features, as described in greater detail below.

In accordance with various other embodiments, gateways 3400 may be further provisioned to passively add and drop traffic to optical rings 3016 and 3018. Two such example embodiments are described below.

FIGURE 17 is a block diagram illustrating an optical network 3000 incorporating ADNs 800 and a gateway 3400. Network 3000 includes a pair of unidirectional fibers, each transporting traffic in opposite directions, specifically a first fiber, or ring, 3016 and a second fiber, or ring, 3018. Rings 3016 and 3018 connect a plurality of ADNs 800 and an optical gateway 3400. Network 3000 is an optical network in which a number of optical channels are carried over a common path in disparate wavelengths/channels. Network 3000 may be a wavelength division multiplexing (WDM), dense wavelength division multiplexing (DWDM), or other suitable multi-channel network. Network 3000 may be used as a metropolitan access network, a long-haul, inter-city network, or any other suitable network or combination of networks.

Optical information signals are transmitted in different directions on rings 3016 and 3018. In the illustrated embodiment, the first ring 3016 is a clockwise ring in which traffic is transmitted in a clockwise direction. The second ring 3018 is a counterclockwise ring in which traffic is transmitted in a counterclockwise direction. ADNs 800 are each operable to passively add and drop traffic to and from the rings 3016 and 3018. In particular, each ADN 800 receives traffic from local clients and adds that traffic to the rings 3016 and 3018. At the same time, each ADN 800 receives traffic from the rings 3016 and 3018 and drops traffic destined for the local clients. In adding and dropping traffic, the ADNs 800 may combine data from clients for transmittal in the rings 3016 and 3018 and may drop channels of data from the rings 16 and 18 for clients. Traffic may be dropped by making the traffic available for transmission to the local clients. Thus, traffic may be dropped and yet continue to circulate on a ring. ADNs 800 communicate the traffic on rings 3016 and 3018 regardless of the channel spacing of the traffic ,- thus providing "flexible" channel spacing in the ADNs 800. In a particular embodiment of the present invention, traffic may be passively added to and/or dropped from the rings 3016 and 3018 by splitting/combining, which is without multiplexing/demultiplexing, in the transport rings and/or separating parts of a signal in the ring.

Signal information such as wavelengths, power and quality parameters may be monitored in ADNs 800 and/or by a centralized control system. Thus, ADNs 800 may provide for circuit protection in the event of a ring cut or other interruption in one or both of the rings 3016 and 3018. An optical supervisory channel (OSC) may be used by the ADNs to communicate with each other and with the control system. In particular embodiments, as described further below with reference to FIGURES 18 through 20, network 3000 may be an OUPSR network. The second ADN 800 may include components allowing the second ADN to select between the traffic arriving via rings 3016 and 3018 so as to forward to a local client the traffic from the ring that has a lower bit-error-rate (BER), a higher power level, and/or any other appropriate and desirable characteristics. Alternatively, such components may select traffic from a designated ring unless that traffic falls below/above a selected level of one or more operating characteristics (in which case, traffic from the other ring may be selected). The use of such dual signals allows traffic to get from the first ADN 800 to the second ADN 800 over at least one of the rings 3016 and 3018 in the event of a ring cut or other damage to the other of the rings 3016 and 3018.

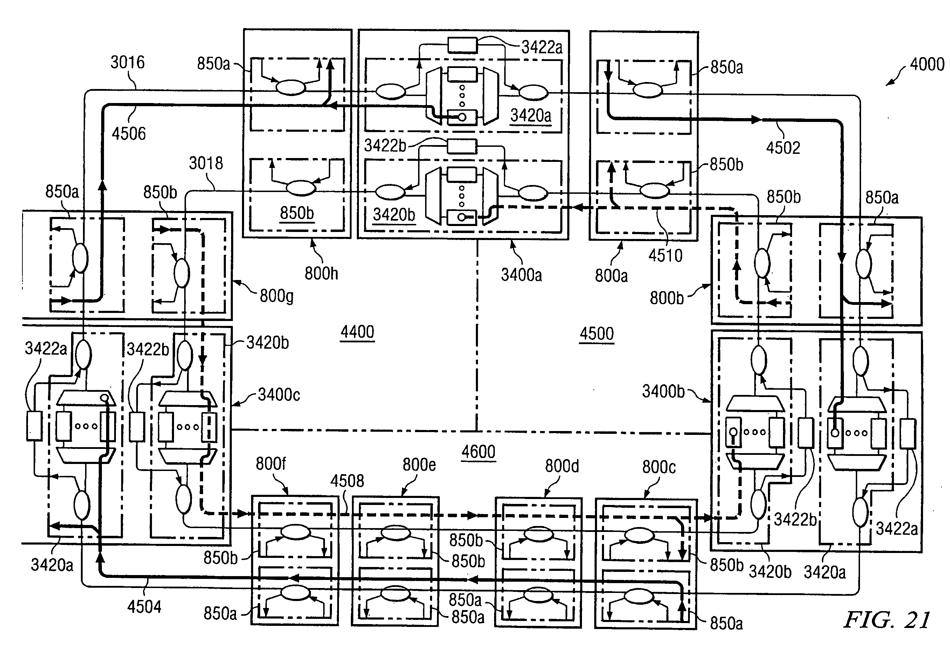

In other embodiments, network 3000 may be an OSPRR network. When not being used in such a back-up capacity, the protection path may communicate other preemptable traffic, thus increasing the capacity of network 3000 in such embodiments. Such an OSPPR protection scheme is described in further detail below in association with FIGURE 21.

The wavelength assignment algorithm may maximize wavelength reuse and/or assign wavelengths heuristically. For example, heuristic assignment may assign all intra-subnet (ingress and egress ADNs in the same subnet) lightpaths the lowest available wavelength. On the other hand inter-subnet lightpaths (those whose ingress and egress ADNs are on different subnets or different rings for that matter) may be assigned on the highest possible wavelengths. This may provide static load balancing and may reduce the number of net transponder card type required in the ring.

In one embodiment, each subnet is assigned to make good use of wavelength resources and has a wavelength channel capacity substantially equal to the optical network. Substantially equal in this context in one embodiment may mean the subnet has eighty percent of its wavelengths isolated from the other subnets and available for intra-subnet traffic. In other embodiments, substantially equal may mean ninety percent or another suitable percentage.

The network may be divided into subnets based on bandwidth usage per ADN. For example, a network may have a particular number of ADNs, a maximum capacity (in terms of bandwidth) of the network, and a typical capacity per ADN. Bandwidth is distributed to each ADN, and the first subnet is built when either the total bandwidth is exhausted completely or when the subnet bandwidth is such that addition of the next ADN would create an excess bandwidth issue. This process is repeated until each ADN is placed in a possible subnet.

FIGURE 18 is a block diagram illustrating example optical signals in an optical network 3000 of FIGURE 17. These example lightpaths illustrate an implementation of network 3000 as an OUPSR network. Network 3000 includes a plurality if ADNs 800 and a single gateway 3400 acting as a hub ADN. Therefore, network 3000 does not comprise subnets. In FIGURE 18, for ease of reference, only high-level details of ADNs 800 and gateway 3400 are shown.

In the illustrated embodiment, three traffic streams are shown. Traffic stream 3250 is a clockwise stream originating from ADN 800g and traveling on ring 3016 destined for ADN 800h. Traffic stream 3522 is a counterclockwise stream originating from ADN 800g and traveling on ring 3018 destined for ADN 800h. Traffic stream 3522' is traffic stream 3522 after having its wavelength converted. Traffic stream 3522' includes the same content as stream 3522, but in a different wavelength. For OUPSR protection, traffic streams 3520 and 3522 include identical content destined for ADN 800h. As described below, these dual OUPSR traffic streams may be implemented by configuring gateway 3400 to provide wavelength conversion of stream 3520 to prevent interference in network 3000.

Traffic stream 3520 is originated in a first wavelength/channel, λ₁, at ADN 800g using a transmitter 270 associated with ring 3016. Stream 3520 is added to existing optical signals on ring 3016 via the coupler 860 of ADN 800g that is associated with ring 3016. Although only stream 3520 is shown on ring 3016, it should be understood that other traffic streams in other wavelengths/channels are also travelling around ring 3016. After exiting ADN 800g, stream 3520 travels via ring 3016 to ADN 800h. The coupler 860 of ADN 800h drops stream 3520, along with all other traffic on ring 3016. A receiver 268 may then be used to receive stream 3520 (for example, using an accompanying filter) and communicate the content in that stream to an appropriate location (for example, a client of ADN 800h). Stream 3520 is also forwarded by coupler 860 of ADN 800h, and travels to gateway 3400.

Coupler 3460a of gateway 3400 both drops and forwards traffic on ring 3016 coming from ADN 800h (including stream 3520). The forwarded traffic is demultiplexed by demultiplexer 3454 of gateway 3400 into its constituent wavelengths/channels, including stream 3520 in λ₁. Demultiplexed stream 3520 is forwarded from the demultiplexer 3454 to its associated switch 3456. The switch 3456 is configured in the illustrated embodiment to terminate stream 3520. Such termination is appropriate since traffic in stream 3520 is destined for ADN 800h, which this traffic has already reached. The dropped stream 3520 included in the traffic dropped from coupler 3460a is similarly terminated by configuring the filters 3230 associated with the signal regeneration element 3440 of the gateway 3400 to not forward λ₁.

Traffic stream 3522 is originated in a second wavelength/channel, λ₂, at ADN 800g using a transmitter 270 associated with ring 3018. The use of λ₂ is used as merely an example and for purposes of distinction. In fact, since ring 3016 is separate from ring 3018, stream 3522 may be (and might typically be) transmitted in λ₁. Furthermore, any other appropriate wavelengths/channels may be used to transmit streams 3522, and 3522'. Stream 3522 is added to existing optical signals on ring 3018 via the coupler 860 of ADN 800g that is associated with ring 3018. Although only stream 3522 (and 3522') is shown on ring 3018, it should be understood that other traffic streams in other wavelengths/channels are also travelling around ring 3018. After exiting ADN 800g, stream 3522 travels via ring 3018 to ADN 800f.

Stream 3522 travels, along with other traffic, through ADNs 800f, 800e, 800d, 800c, 800b, and 800a to gateway 3400. The traffic stream 3522 is not shown as being dropped by ADNs 800f, 800e, 800d, 800c, 800b, and 800a because stream 3522 is not destined for these ADNs. However, it should be understood that coupler 860 of each of these ADNs both forwards stream 3522 (along with the rest of the traffic on ring 3018) and drops stream 3522 (along with the other traffic). The filters 266 associated with each of these ADNs filter out λ₂, as described above, since stream 3522 is not destined for these ADNs.

Upon reaching gateway 3400, coupler 3460a of gateway 3400 both drops and forwards traffic on ring 3018 coming from ADN 800a (including stream 3522). For the purposes of this example, stream 3522 requires wavelength conversion at this point since travel of stream 3522 in λ₂ through gateway 3400 will create interference with the traffic originating from ADN 800g in λ₂. Therefore, once the traffic forwarded by coupler 3460a is demultiplexed by demultiplexer 3454 of gateway 3400, demultiplexed stream 3522 in λ₂ is terminated by a switch 3456.

The traffic dropped by coupler 3460a is forwarded to a signal regeneration element 3440 associated with ring 3018. The dropped traffic is split into multiple copies by a splitter 3222 and stream 3522 is forwarded through to a transponder 3232 by a filter 3230 selecting λ₂. Stream 3522 is then regenerated using transponder 3232 and its wavelength is converted to λ₃ by transponder 3234 (although, as described above, a single transponder may be used in particular embodiments). The regenerated and wavelength converted stream 3522' is then combined with other signals being forwarded through the signal regeneration element 3440 by a combiner 3224, and the combined signal is added to traffic forwarding though mux/demux unit 3450 by coupler 3460b. This combined traffic is communicated from gateway 3400 to ADN 800h, its destination.

Coupler 860 of ADN 800h both forwards stream 3522' (along with the rest of the traffic on ring 3018) and drops stream 3522' (along with the other traffic). One of the filters 266 associated with ADN 800h forwards through λ₃, since stream 3522' is destined for ADN 800h. Stream 3522' also continues on to ADN 800g, which drops and filters out stream 3522'. Since stream 3522' is now in λ₃, no interference is caused when stream 3522' is combined with stream 3522 originating from ADN 800g in λ₂. Then stream 3522' travels from ADN 800g to ADN 800f.

As with stream 3522, stream 3522' travels, along with other traffic, through ADNs 800f, 800e, 800d, 800c, 800b, and 800a to gateway 3400. Traffic stream 3522' is not shown as being dropped by ADNs 800f, 800e, 800d, 800c, 800b, and 800a because stream 3522' is not destined for these ADNs. However, it should be understood that coupler 860 of each of these ADNs both forwards stream 3522' (along with the rest of the traffic on ring 3018) and drops stream 3522' (along with the other traffic). The filters 266 associated with each of these ADNs filter out λ₃, as described above, since stream 3522' is not destined for these ADNs.

As with stream 3522, coupler 3460a of gateway 3400 both drops and forwards stream 3522'. The forwarded stream 3522' is terminated by a switch 3456 after being demultiplexed by demultiplexer 3454. Such termination is appropriate since traffic in stream 3522' is destined for ADN 800h, which this traffic has already reached, and since further travel of stream 3522' would interfere with the stream 3522' originating from gateway 3400. The dropped stream 3522' included in the traffic dropped from coupler 3460a is similarly terminated by configuring the filters 3230 associated with the signal regeneration element 3440 of the gateway 3400 to not forward λ₃. Therefore, interference is prevented.

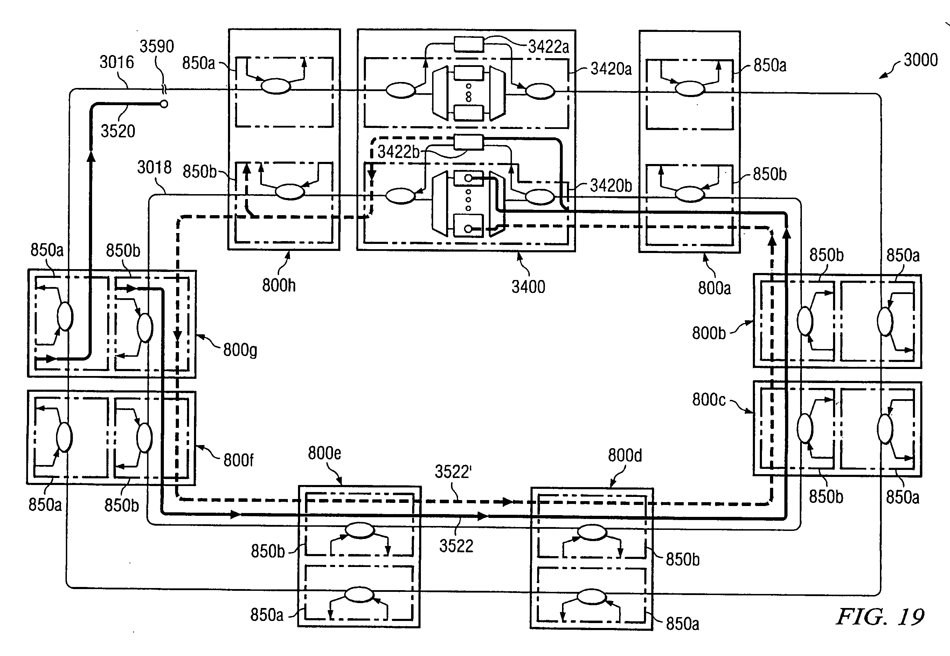

In this manner, OUSPR protection can be provided in network 3000 through the configuration of gateway 3400 and ADNs 800. This protection is implemented in one embodiment by providing traffic stream 3520 that travels clockwise around ring 3016 from its origin to its destination, and traffic streams 3522 and 3522' including the same content as the first traffic stream 3520 that travel counterclockwise around ring 3018. Therefore, protection is provided since the content can reach the destination even if there is a break or other error in rings 3016 or 3018 at one or more locations, such as ring cut 3590. For example, as shown in FIGURE 19, if ring 3016 is broken between ADNs 800g and 800h, traffic stream 3520 will not reach ADN 800h. However, as discussed above, traffic stream 3522 includes the same content as stream 3520. Traffic stream 3522 originates at ADN 800g and passes through ADNs 800f, 800e, 800d, 800c, 800b, and 800a before arriving at gateway 3400 where traffic stream 3520 is wavelength converted into traffic stream 3522'. Traffic stream 3522' contains identical content to traffic stream 3522, and thus, identical content to traffic stream 3520. Traffic stream 3522' will reach ADN 800h after originating at gateway 3400, thus, providing traffic protection. It will be understood that breaks or other errors in network 3000 may be dealt with in a similar fashion.

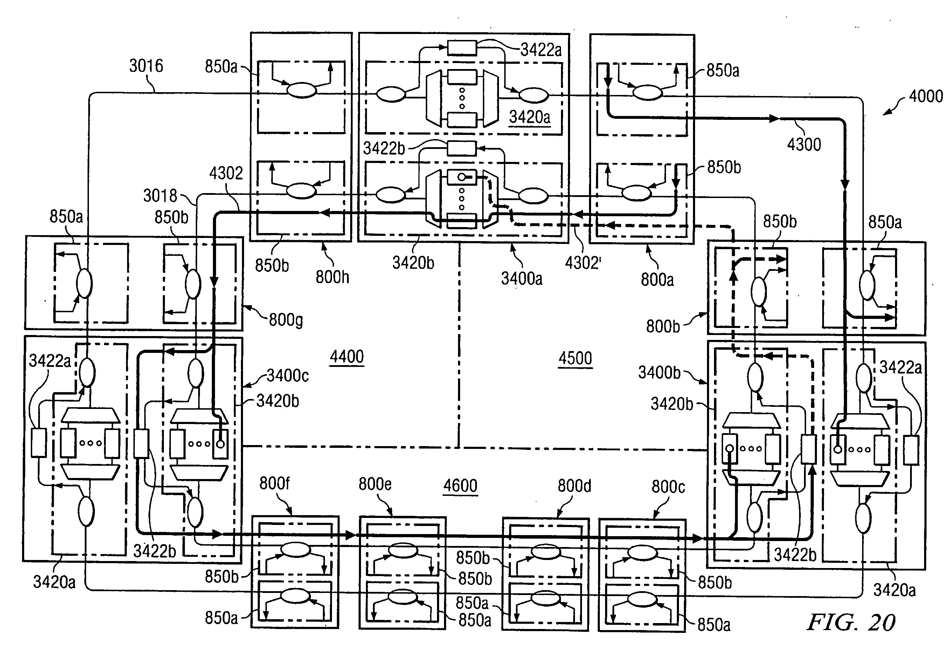

Because network 3000 contains elements which allow for protection switching and lightpath protection, as shown in FIGURE 19, network 3000 may be upgraded while in service without disrupting traffic in the network. As discussed above, a ring cut 3590, or other interruption of traffic, will not prevent any ADN 800 in the network from receiving traffic. Therefore, network maintenance or upgrade procedures which require a ring to be cut will not cause a disruption in the traffic flow on the network. For example, network 3000 may be upgraded to an optical ring network having multiple optical subnets (the configuration of network 4000 of FIGURE 20, discussed below with reference to FIGURES 20-21) by cutting rings 3016 and 3018 of network 3000 in the appropriate locations and inserting two additional network gateways. Although network 4000 is illustrated has having three gateways, and therefore, three subnets, any appropriate number of gateways/subnets may be used. Rings 3016 and 3018 may be cut in one location between the appropriate ADNs 800 and gateway 3400b may be inserted and connected to the network. When the rings are cut, the network provides protection switching as illustrated in FIGURE 19. In this manner, the network stays in service, as traffic is able to flow around the network while the network is being upgraded.

Next, rings 3016 and 3018 may be cut in another location between the appropriate ADNs 800 and gateway 3400c may be inserted and connected to the network. Installation of each gateway is independent of the installation of the other gateway. Once a first gateway is installed, traffic is allowed to flow through the gateway normally. This procedure is repeated for each subsequent gateway.

FIGURE 20 is a block diagram illustrating example optical signals associated with an example configuration of optical network 4000. Optical network 4000 is similar to optical network 2000, shown in FIGURE 13, except that ADNs 800 and gateways 3400 of FIGURE 20 have different configurations than ADNs 600 and gateways 1400 of FIGURE 13. The example optical signal lightpaths illustrate an implementation of network 4000 as an OUPSR network. In FIGURE 20, for ease of reference, only high-level details of ADNs 800 and gateways 3400 are shown. The example optical network 4000 includes three subnets 4400, 4500, and 4600. Subnet 4400 includes ADNs 800g and 800h, subnet 4500 includes ADNs 800a and 800b, and subnet 4600 includes ADNs 800f, 800e, 800d, and 800c. Gateway 3400a divides subnets 4400 and 4500, gateway 3400b divides subnets 4500 and 4600, and gateway 3400c divides subnets 4600 and 4400. All of these ADNs 800 and gateways 3400 may have a "drop and continue" function, as described below.

In the illustrated embodiment, three traffic streams are shown. Traffic stream 4300 is a clockwise stream originating from ADN 800a and traveling on ring 3016 destined for ADN 800b. Traffic stream 4302 is a counterclockwise stream originating from ADN 800a and traveling on ring 3018 destined for ADN 800b. Traffic stream 4302' is traffic stream 4302 after having its wavelength converted. Traffic stream 4302' includes the same content as stream 4302, but in a different wavelength/channel. For OUPSR protection, traffic streams 4300 and 4302 include identical content destined for ADN 800b. As described below, these dual OUPSR traffic streams may be implemented by configuring gateways 3400 to provide selective regeneration and/or wavelength conversion of streams 4300 and/or 4302 in appropriate circumstances. For example, streams 4300 and/or 4302 may be regenerated after traveling a particular distance, and stream 4302 may be wavelength converted to stream 4302' to prevent interference with itself as it travels through the subnet in which it originated. Such selective regeneration and/or wavelength conversion allows for travel of streams 4300 and 4302 over relatively long distances (if applicable).

Traffic stream 4300 is originated in a first wavelength/channel, λ₁, at ADN 800a using a transmitter 270 associated with ring 3016. Stream 4300 is added to existing optical signals on ring 3016 via the coupler 860 of ADN 800a that is associated with ring 3016. Although only stream 4300 is shown on ring 3016, it should be understood that other traffic streams in other wavelengths/channels (or possibly in the same wavelength/channel in other subnets) are also travelling around ring 3016. After exiting ADN 800a, stream 4300 travels via ring 3016 to ADN 800b. The coupler 860 of ADN 800b drops stream 4300, along with all other traffic on ring 3016. A receiver 268 (with an associated filter 266) may then be used to receive stream 4300 and forward the information in that stream to an appropriate location. Stream 4300 is also forwarded by coupler 860 of ADN 800b, and travels to gateway 3400b.

Coupler 3460a of gateway 3400b both drops (in other words, forwards a copy to regeneration element 3440) and forwards traffic on ring 3016 coming from ADN 800b (including stream 4300). The forwarded traffic is demultiplexed by demultiplexer 3454 of gateway 3400b into its constituent wavelengths/channels, including stream 4300 in λ₁. Demultiplexed stream 4300 is forwarded from the demultiplexer 3454 to its associated switch 3456. The switch 3456 is configured in the illustrated embodiment to terminate stream 4300. Such termination is appropriate since traffic in stream 4300 is destined for ADN 800b, which this traffic has already reached. The dropped stream 4300 included in the traffic dropped from coupler 3460a is similarly terminated by configuring the filters 3230 associated with the signal regeneration element 3440 of gateways 3400 to not forward λ₁. Because stream 4300 is terminated before entering subnets 4600 and 4400, λ₁ may be reused in these subnets for other traffic, if desired.

Traffic stream 4302 is originated in a second wavelength/channel, λ₂, at ADN 800a using a transmitter 270 associated with ring 3018. The use of λ₂ is used as merely an example and for purposes of distinction. In fact, since ring 3016 is separate from ring 3018, stream 4302 may be (and might typically be) transmitted in λ₁. Furthermore, any other appropriate wavelengths/channels may be used to transmit streams 4302, 4300, and 4302'. Stream 4302 is added to existing optical signals on ring 3018 via the coupler 860 of ADN 800a that is associated with ring 3018. Although only stream 4302 (and 4302') is shown on ring 3018, it should be understood that other traffic streams in other wavelengths/channels (or possibly in the same wavelength/channel in other subnets) are also travelling around ring 3018. After exiting ADN 800a, stream 4302 travels via ring 3018 to gateway 3400a.

Coupler 3460a of gateway 3400a both drops and forwards traffic on ring 3018 coming from ADN 800a (including stream 4302). The forwarded traffic is demultiplexed by demultiplexer 3454 of gateway 3400a into its constituent wavelengths/channels, including stream 4302 in λ₂. Demultiplexed stream 4302 is forwarded from the demultiplexer 3454 to its associated switch 3456. The switch 3456 is configured in the illustrated embodiment to forward stream 4302. Such forwarding is appropriate since traffic in stream 4302 is destined for ADN 800b, which this traffic has not yet reached, and since the stream 4302 does not need to be regenerated or wavelength converted. It is assumed in the illustrated embodiment that the distance from ADN 800a to gateway 3400a is not large enough to require signal regeneration. The forwarded stream 4302 is recombined with other demultiplexed traffic using multiplexer 3452. The dropped stream 4302 included in the traffic dropped from coupler 3460a is terminated (since no regeneration or wavelength conversion is needed) by configuring the filters 3230 associated with the signal regeneration element 3440 of the gateway 3400a to not forward λ₂.

Stream 4302 travels, along with other traffic, from gateway 3400a through ADN 800h and 800g to gateway 3400c. The traffic stream 4302 is not shown as being dropped by ADNs 800h and 800g because stream 4302 is not destined for these ADNs. However, it should be understood that coupler 860 of ADNs 800h and 800g both forwards stream 4302 (along with the rest of the traffic on ring 3018) and drops stream 4302 (along with the other traffic). The filters 266 associated with ADNs 800h and 800g filter out λ₂, as described above, since stream 4302 is not destined for these ADNs. Alternatively, wavelengths may be filtered out by an electrical switch in the receiver 268.

Upon reaching gateway 3400c, coupler 3460a of gateway 3400c both drops and forwards traffic on ring 3018 coming from ADN 800g (including stream 4302). For the purposes of this example, it is assumed that stream 4302 requires regeneration due to the distance it has traveled around ring 3018 to this point. Therefore, once the traffic forwarded by coupler 3460a is demultiplexed by demultiplexer 3454 of gateway 3400c, demultiplexed stream 4302 in λ₂ is terminated by a switch 3456. Such termination is appropriate since traffic in stream 4302 is regenerated using signal regeneration element 3440 and added back onto ring 3018 at coupler 3460b.

The traffic dropped by coupler 3460a is forwarded to a signal regeneration element 3440a associated with ring 3018. The dropped traffic is split into multiple copies by a splitter 3222 and stream 4302 is forwarded through to a transponder 3232 by a filter 3230. Stream 4302 is then regenerated using transponder 3232 and/or transponder 3234 (as described above, stream 4302 may be dropped at switch 3342, added to at switch 3344 or passed through without alteration to transponder 3234.). No wavelength conversion is performed at this point in the illustrated embodiment. The regenerated stream 4302 is then combined with other signals being forwarding through the signal regeneration element 3440 by a combiner 3224, and the combined signal is added to traffic forwarding though mux/demux unit 3450 by coupler 3460b. This combined traffic is communicated from gateway 3400c to ADN 800f.

Stream 4302 travels, along with other traffic, from gateway 3400c through ADNs 800f, 800e, 800d, and 800c to gateway 3400b. The traffic stream 4302 is not shown as being dropped by ADNs 800f, 800e, 800d, and 800c because stream 4302 is not destined for these ADNs. However, it should be understood that coupler 860 of ADNs 800f, 800e, 800d, and 800c both forwards stream 4302 (along with the rest of the traffic on ring 3018) and drops stream 4302 (along with the other traffic). The filters 266 associated with ADNs 800f, 800e, 800d, and 800c filter out λ₂, as described above, since stream 4302 is not destined for these ADNs.

Upon reaching gateway 3400b, coupler 3460a of gateway 3400b both drops and forwards traffic on ring 3018 coming from ADN 8009 (including stream 4302). For the purposes of this example, stream 4302 requires wavelength conversion at this point since travel of stream 4302 in λ₂ in subnet 4500 will create interference with traffic originating from ADN 800a in λ₂. Therefore, once the traffic forwarded by coupler 3460a is demultiplexed by demultiplexer 3454 of gateway 3400b, demultiplexed stream 4302 in λ₂ is terminated by a switch 3456.

The traffic dropped by coupler 3460a is forwarded to a signal regeneration element 3440a associated with ring 3018. The dropped traffic is split into multiple copies by a splitter 3222 and stream 4302 is forwarded through to a transponder 3232 by a filter 3230 which allows λ₂ to be forwarded to the transponder 3232. Stream 4302 is then regenerated using transponder 3232 and its wavelength is converted to λ₃ by transponder 3234 (although, as described above, stream 4302 may be dropped at switch 3342, added to at switch 3344, or passed through without alteration to transponder 3234). The regenerated and wavelength converted stream 4302' is then combined with other signals being forwarded through the signal regeneration element 3440 by a combiner 3224, and the combined signal is added to traffic forwarding though mux/demux unit 3450 by coupler 3460b. This combined traffic is communicated from gateway 3400b to ADN 800b.

Coupler 860 of ADN 800b both forwards stream 4302' (along with the rest of the traffic on ring 3018) and drops stream 4302' (along with the other traffic). One of the filters 266 associated with ADN 800b is configured to forward through λ₃, since stream 4302' is destined for ADN 800b. Stream 4302' also continues on to ADN 800a, which drops and filters out stream 4302'. Coupler 860 of ADN 800a also forwards stream 4320', but since stream 4302' is now in λ₃, no interference is caused when stream 4302' is combined at coupler 860 with stream 4302 originating from ADN 800a in λ₂. Stream then 4302' travels from ADN 800a to gateway 3400a.

Coupler 3460a of gateway 3400a both drops and forwards traffic on ring 3018 coming from ADN 800b (including stream 4302'). The forwarded traffic is demultiplexed by demultiplexer 3454 of gateway 3400b into its constituent wavelengths/channels, including stream 4302' in λ₃. Demultiplexed stream 4302' is forwarded from the demultiplexer 3454 to its associated switch 3456. The switch 3456 is configured in the illustrated embodiment to terminate stream 4302'. Such termination is appropriate since traffic in stream 4302' is destined for ADN 800b, which this traffic has already reached. The dropped stream 4302' included in the traffic dropped from coupler 3460a is similarly terminated by configuring the filters 3230 associated with the signal regeneration element 3440b of the gateway 3400a to not forward λ₃. Because stream 4302' is terminated before entering subnets 4400 and 4600, λ₃ may be reused in these subnets for other traffic, if desired.

In this manner, OUSPR protection can be provided in network 4000 through the configuration of gateways 3400 and ADNs 800. This protection is implemented by providing traffic stream 4300 that travels clockwise around ring 3016 from its origin to its destination, and traffic streams 4302 and 4302', including the same information as the first traffic stream 4300, that travel counterclockwise around ring 3018. Therefore, protection is provided since the information can reach the destination even if there is a break or other error in rings 3016 and/or 3018. For example, if rings 3016 and 3018 are broken between ADNs 800a and 800b, traffic stream 4300 will not reach ADN 800b. However, traffic stream 4302' will reach ADN 800b- thus providing traffic protection. It will be understood that breaks or other errors in other locations of network 4000 may be dealt with in a similar fashion. Furthermore, although the example OUPSR network implementation described in FIGURE 20 includes three subnets with two subnets having two ADNs 800 and one subnet having four ADNs 800, any appropriate number of ADNs 800, gateways 3400, and subnets may be used. Each gateway 3400 may still be configured to at least terminate, optically pass-through, regenerate, or regenerate and wavelength convert traffic on each incoming channel depending on the source and destination of that traffic. Moreover, a single gateway 3400 may be used as a hub ADN in a network having no subnets, as described below.

FIGURE 21 is a block diagram illustrating example optical signals of an example configuration of optical network 4000. These example optical signals illustrate an implementation of network 4000 as an OSPPR network. In FIGURE 21, for ease of reference, only high-level details of ADNs 800 and gateways 3400 are shown. The example optical network 4000 includes three subnets 4400, 4500, and 4600. Subnet 4400 includes ADNs 800g and 800h, subnet 4500 includes ADNs 800a and 800b, and subnet 4600 includes ADNs 800c, 800d, 800e, and 800f. Gateway 3400a divides subnets 4400 and 4500, gateway 3400b divides subnets 4500 and 4600, and gateway 3400c divides subnets 4600 and 4400.

In the illustrated embodiment, several traffic streams are shown. Some of these streams comprise preemtable signals (or protection channel access (PCA) streams) and protected (or work) signals. Preemtable signals are signals that are terminated to provide protection to other signals. Protected signals are signals for which protection is provided. In the event of a ring cut or other interruption causing a protected stream to not reach its destination ADN(s), one or more preemtable streams may be terminated to allow the protected traffic to be transmitted instead of the preemtable stream. After the interruption has been repaired, the network may revert to its pre-interruption state. In one embodiment, the protection-switchable traffic may comprise higher-priority traffic than the preemtable traffic; however, it will be understood that other divisions of the traffic streams into protected and preemtable portions may be suitable or desirable in other embodiments.

Referring now to FIGURE 21, during normal operations, protected traffic streams 4502, 4504, and 4506 are transmitted in clockwise ring 3016 in each of subnets 4400, 4500, and 4600. Traffic stream 4502 is a clockwise stream originating from ADN 800a and destined for ADN 800b, traffic stream 4504 is a clockwise stream originating from ADN 800c and destined for gateway 3400c, and traffic stream 4506 is a clockwise stream originating from ADN 800g and destined for ADN 800h. In the illustrated embodiment, protected traffic streams 4502, 4504, and 4506 are transmitted in the same wavelength (for example, λ₁) in each subnet. Preemtable traffic streams 4508 and 4510 are transmitted in counterclockwise ring 3018 also in λ₁. Traffic stream 4508 is a counterclockwise stream originating from ADN 800g and destined for ADN 800c, and traffic stream 4510 is a counterclockwise stream originating from ADN 800b and destined for ADN 800a. Streams 4508 and 4510 may be interrupted during protection switching to protect a higher-priority stream.

Although traffic in a single, example wavelength is illustrated, it will be understood that protected traffic and preemtable traffic are transmitted in numerous other wavelengths/channels in rings 3016 and 3018. Furthermore, although protected traffic is illustrated as being transmitted in the same wavelength as preemtable traffic (although on a different ring), numerous other configurations may be implemented. As an example only, work traffic may be transmitted on ring 3016 in odd-numbered channels and in even-numbered channels on ring 3018. Preemtable traffic may be transmitted in ring 3016 in even-numbered channels and in odd-numbered channels on ring 3018. Any other suitable configurations may be used.

Protected traffic stream 4502 is originated in a first wavelength, λ₁, at ADN 800a using a transmitter 270 associated with ring 3016. Stream 4502 is added to existing optical signals on ring 3016 via the coupler 860 of ADN 800a that is associated with ring 3016. After exiting ADN 800a, stream 4502 travels via ring 3016 to ADN 800b. The coupler 860 of ADN 800b drops stream 4502, along with all other traffic on ring 3016. A receiver 268 may then be used to receive stream 4502 and communicate the information in that stream to an appropriate location. Stream 4502 is also forwarded by coupler 860 of ADN 800b, and travels to gateway 3400b.

Coupler 3460a of gateway 3400b both drops and forwards traffic on ring 3016 coming from ADN 800b (including stream 4502). The forwarded traffic is demultiplexed by demultiplexer 3454 of gateway 3400b into its constituent wavelengths/channels, including stream 4502 in λ₁. Demultiplexed stream 4502 is forwarded from the demultiplexer 3454 to its associated switch 3456. The switch 3456 is configured in the illustrated embodiment to terminate stream 4502. Such termination is appropriate since traffic in stream 4502 is destined for ADN 800b, which this traffic has already reached. The dropped stream 4502 included in the traffic dropped from coupler 3460a is similarly terminated by configuring the filters 3230 associated with the signal regeneration element 3440 of gateway 3400b to not forward λ₁. Because stream 4502 is terminated before entering subnets 4600 and 4400, λ₁ may be reused in these subnets for streams 4504 and 4506.

Protected traffic stream 4504 is originated in wavelength λ₁ at ADN 800c using a transmitter 270 associated with ring 3016. Stream 4504 is added to existing optical signals on ring 3016 via the coupler 860 of ADN 800c that is associated with ring 3016. Stream 4504 travels, along with other traffic, from ADN 800c through ADNs 800d, 800e, and 800f to gateway 3400c. The traffic stream 4504 is not shown as being dropped by ADN 800d, 800e, or 800f because stream 4504 is not destined for those ADNs. However, it should be understood that couplers 860 of ADNs 800d, 800e, and 800f forwards stream 4504 (along with the rest of the traffic on ring 3016) and drops stream 4504 (along with the other traffic). The filters 266 associated with ADNs 800d, 800e, and 800f filter out λ₁, since stream 4504 is not destined for those ADNs.

Upon reaching gateway 3400c, coupler 3460a of gateway 3400c both drops and forwards traffic on ring 3016 coming from ADN 800f (including stream 4504). Since stream 4504 is destined for gateway 3400c (in this example, gateway 3400c includes the components of an ADN, as described above), once the traffic forwarded by coupler 3460a is demultiplexed by demultiplexer 3454 of gateway 3400c, demultiplexed stream 4504 in λ₁ is terminated by a switch 3456. The traffic dropped by coupler 3460a is forwarded to a receiver 3232 (for example, via a distributing/combining element 3222 and a filter 3230) that may then be used to receive stream 4504 and communicate the content in that stream to an appropriate location (for example, a client coupled to gateway 3400c).

Protected traffic stream 4506 is originated in wavelength λ₁ at ADN 800g using a transmitter 270 associated with ring 3016. Stream 4506 is added to existing optical signals on ring 3016 via the coupler 860 of ADN 800g that is associated with ring 3016. After exiting ADN 800g, stream 4506 travels via ring 3016 to ADN 800h. The coupler 860 of ADN 800h drops stream 4506, along with all other traffic on ring 3016. A receiver 268 may then be used to receive stream 4506 and communicate the content in that stream to an appropriate client of ADN 800h. Stream 4506 is also forwarded by coupler 860 of ADN 800h, and travels to gateway 3400a.

Coupler 3460a of gateway 3400a both drops and forwards traffic on ring 3016 coming from ADN 800h (including stream 4506). The forwarded traffic is demultiplexed by demultiplexer 3454 of gateway 3400a into its constituent wavelengths/channels, including stream 4506 in λ₁. Demultiplexed stream 4506 is forwarded from the demultiplexer 3454 to its associated switch 3456. The switch 3456 is configured in the illustrated embodiment to terminate stream 4506. Such termination is appropriate since traffic in stream 4506 is destined for ADN 800h, which this traffic has already reached. The dropped stream 4506 included in the traffic dropped from coupler 3460a is similarly terminated by configuring the filters 3230 associated with the signal regeneration element 3440 of gateway 3400a to not forward λ₁. Because stream 4506 is terminated before entering subnets 4500 and 4600, λ₁ may be reused in these subnets for streams 4502 and 4504.

Preemtable traffic stream 4508 is originated in the first wavelength, λ₁, at ADN 800g using a transmitter 270 associated with ring 3018. Stream 4508 is added to existing optical signals on ring 3018 via the coupler 860 of ADN 800g that is associated with ring 3018. After exiting ADN 800g, stream 4508 travels via ring 3018 to gateway 3400c.

Coupler 3460a of gateway 3400c both drops and forwards traffic on ring 3018 coming from ADN 800g (including stream 4508). The forwarded traffic is demultiplexed by demultiplexer 3454 of gateway 3400c into its constituent wavelengths/channels, including stream 4508. Demultiplexed stream 4508 is forwarded from the demultiplexer 3454 to its associated switch 3456, where it is forwarded through. Such forwarding is appropriate since traffic in stream 4508 is destined for ADN 800c, which this traffic has not yet reached, and since it is assumed that the stream 4508 does not need to be regenerated (regeneration could be performed if needed). The forwarded stream 4508 is recombined with other demultiplexed traffic using multiplexer 3452. The dropped stream 4508 included in the traffic dropped from coupler 3460a is filtered out at the signal regeneration element 3440.

Stream 4508 travels, along with other traffic, from gateway 3400c through ADNs 800f, 800e, and 800d to ADN 800c. The coupler 860 of ADN 800c drops stream 4508, along with all other traffic on ring 3018. A receiver 268 may then be used to receive stream 4508 and communicate the information in that stream to an appropriate location. Stream 4508 is also forwarded by coupler 860 of ADN 800c, and travels to gateway 3400b, where it is terminated (since the destination has been reached).

Preemtable traffic stream 4510 is originated in wavelength λ₁ at ADN 800b using a transmitter 270 associated with ring 3018. Stream 4510 is added to existing optical signals on ring 3018 via the coupler 860 of ADN 800b that is associated with ring 3018. After exiting ADN 800b, stream 4510 travels via ring 3018 to ADN 800a. The coupler 860 of ADN 800a drops stream 4510, along with all other traffic on ring 3018. A receiver 268 may then be used to receive stream 4510 and communicate the information in that stream to an appropriate client. Stream 4510 is also forwarded by coupler 860 of ADN 800a, and travels to gateway 3400a, where it is terminated (since the destination has been reached). Therefore, through the use of gateways 3400 to provide subnets, rings 3016 and 3018 may be used to communicate different information in different subnets using the same wavelength. Furthermore, since some of this traffic (in the example above, the traffic on ring 3018) is deemed preemtable, OSPPR protection can be implemented in the case of a failure in ring 3016 and/or ring 3018.

Although the present invention has been described with several embodiments, a multitude of changes, substitutions, variations, alterations, and modifications may be suggested to one skilled in the art, as it is intended that the invention encompass all such changes, substitutions, variations, alterations, and modifications as fall within the spirit and scope of the appended claims.

## Claims

1. A method for an in-service upgrade of a twin ring optical network comprising a plurality of passive add/drop nodes coupled using a first optical fiber ring and a second optical fiber ring, the method comprising:
interrupting optical traffic travelling in a first direction on the first optical fiber ring at a first interruption location between a first passive add/drop node and a second passive add/drop node, the add/drop nodes coupled to the optical rings and operable to passively add and drop traffic to and from the optical rings;
interrupting optical traffic travelling in a second disparate direction on the second optical fiber ring at a second interruption location between the first add/drop node and the second add/drop node, the first and second interruption locations proximate to one another, the network providing protection switching such that interrupting traffic flow at the first or second interruption locations does not prevent traffic on the network from reaching any add/drop node; and
inserting an optical gateway node into the network, the gateway node comprising a first transport element associated with the first fiber ring and a second transport element associated with the second fiber ring, each transport element comprising:
a demultiplexer operable to demultiplex ingress traffic into a plurality of constituent wavelengths;
a switch operable to selectively forward or terminate each wavelength; and
a multiplexer operable to multiplex the forwarded wavelengths;
wherein the gateway node is inserted into the optical ring network such that the first transport element is inserted at the first interruption location and the second transport element is inserted at the second interruption location.

2. The method of Claim 1, further comprising inserting a plurality of optical gateway nodes into the network to create a plurality of subnets, each subnet comprising a plurality of add/drop nodes, the number of subnets equal to the number of gateways in the network.

3. The method of Claim 2, wherein each gateway node is coupled to the optical rings at a boundary between neighboring subnets and is operable to selectively forward and terminate wavelengths between subnets to allow wavelength reuse in the subnets to provide protection switching.

4. The method of Claim 2, wherein each subnet has a wavelength channel capacity substantially equal to the optical network.

5. The method of Claim 1, wherein the demultiplexer and the multiplexer comprise array waveguides.

6. The method of Claim 1, wherein the switch comprises a 2x2 switch for each channel, the 2x2 switch operable to selectively add, forward, or drop the channel.

7. The method of Claim 1, wherein the add/drop nodes are operable to transmit substantially the same traffic over each of the first and second optical fiber rings.

8. The method of Claim 1, wherein each add/drop node comprises:
a first transport element operable to be coupled to the first optical ring and a second transport element operable to be coupled to the second optical ring, the first and second transport elements each comprising a first coupler, a second coupler, and a ring switch;
the first optical coupler operable to receive ingress traffic on the optical ring and to forward a first and second copy of the ingress traffic, the second copy comprising local drop traffic;
the second optical coupler operable to receive the forwarded first copy and local add traffic and further operable to passively combine the first copy and the local add traffic to generate an egress signal;
a distributing element coupled to the first optical coupler of each transport element and operable to forward the second copy to one or more appropriate clients of the add/drop node; and
a combining element coupled to the second optical coupler of each transport element and operable to receive the local add traffic from the clients and to forward the local add traffic to the second optical coupler of each transport element.

9. The method of Claim 8, wherein the distributing element comprises:
a splitter operable to make a plurality of copies of the forwarded second copy from the first optical coupler;
one or more filters each operable to receive one of the plurality of copies of the second copy and to forward one or more wavelengths of the associated copy; and
one or more optical receivers operable to receive each filtered wavelength from the one or more filters.

10. The method of Claim 8, wherein the distributing element comprises:
an amplifier coupled to the first optical coupler of each transport element and operable to amplify the second copy of the ingress traffic from each transport element;
a splitter coupled to the first optical coupler of each transport element and operable to make a plurality of copies of the forwarded second copy from the first optical coupler of each transport element;
one or more switches coupled to the first optical coupler of each transport element, each switch operable to receive a copy of each second copy from the splitter and to selectively forward a copy of the second copy from either the first or second transport element to the clients of the add/drop node;
one or more filters each operable to receive one of the plurality of copies of the second copy and to forward one or more wavelengths of the associated copy; and
one or more receivers operable to receive each filtered wavelength from the one or more filters.

11. The method of Claim 8, wherein the combining element comprises:
one or more optical senders operable to forward the received local traffic to the second optical coupler of each transport element;
a splitter operable to combine the local traffic and forward the combined local traffic to the second optical coupler of each transport element; and
an amplifier coupled to the second optical coupler of each transport element and operable to amplify the combined local traffic.

12. The method of Claim 8, wherein the combining element comprises:
one or more optical senders operable to forward the received local traffic to the second optical coupler of each transport element;
one or more switches coupled to the second optical coupler of each transport element, each switch operable to receive the local traffic and to selectively forward the local traffic to either the first or second transport element from the clients of the add/drop node;
a splitter operable to combine the local traffic and forward the combined local traffic to the second optical coupler of each transport element; and
an amplifier coupled to the second optical coupler of each transport element and operable to amplify the local traffic received from the clients of the add/drop node.

13. A method for an in-service upgrade of a twin ring optical network comprising a plurality of passive add/drop nodes coupled using a first optical fiber ring and a second optical fiber ring, the method comprising:
interrupting optical traffic travelling in a first direction on the first optical fiber ring at a first interruption location between a first passive add/drop node and a second passive add/drop node, the add/drop nodes coupled to the optical rings and operable to passively add and drop traffic to and from the optical rings;
interrupting optical traffic travelling in a second disparate direction on the second optical fiber ring at a second interruption location between the first add/drop node and the second add/drop node, the first and second interruption locations proximate to one another, the network providing protection switching such that interrupting traffic flow at the first or second interruption locations does not prevent traffic on the network from reaching any add/drop node; and
inserting an optical gateway node into the network, the gateway node comprising:
a first transport element associated with the first fiber ring;
a second transport element associated with the second fiber ring;
a first optical coupler operable to receive ingress traffic on the optical ring and to forward a first and a second copy of the ingress traffic;
a multiplexer/demultiplexer unit operable to receive the first copy of the ingress traffic from the first optical coupler, the multiplexer/demultiplexer unit comprising:
a demultiplexer operable to demultiplex the first copy of the ingress traffic into a plurality of constituent wavelengths;
a switch operable to selectively forward or terminate each wavelength; and
a multiplexer operable to multiplex the forwarded wavelengths;
a signal regeneration element operable to receive the second copy of the ingress traffic from the first optical coupler and to selectively regenerate a signal in one or more constituent wavelengths of the ingress traffic; and
a second optical coupler operable to:
receive the regenerated signals in one or more wavelengths;
receive the multiplexed forwarded wavelengths from the multiplexer; and
combine the multiplexed forwarded wavelengths with the regenerated wavelengths received from the signal regeneration element such that the combined signal is forwarded on the optical ring;
wherein the gateway node is inserted into the optical ring network such that the first transport element is inserted at the first interruption location and the second transport element is inserted at the second interruption location.

14. The method of Claim 13, wherein the signal regeneration element is further operable to convert the wavelength of one or more of the regenerated signals.

15. The method of Claim 13, wherein the signal regeneration element comprises:
a splitter operable to make a plurality of copies of the second copy received from the first optical coupler;
one or more filters each operable to receive one of the plurality of copies of the second copy and to forward one or more wavelengths of the associated copy;
one or more transponders operable to receive each filtered wavelength from the one or more filters and to regenerate the signal in that wavelength; and
a combiner operable to receive and combine the regenerated signals and to forward the combined signals to the second optical coupler.

16. The method of Claim 15, wherein one or more of the transponders are further operable to convert the wavelength of the signal associated with a filtered wavelength that is received at the transponder.

17. The method of Claim 13, wherein each wavelength that is regenerated by the signal regeneration element is terminated by the multiplexer/demultiplexer unit.

18. The method of Claim 13, wherein the signal regeneration element is further operable to drop the signal in one or more wavelengths of the second copy of the ingress traffic to one or more appropriate clients of the optical gateway node.

19. The method of Claim 13, wherein the signal regeneration element is further operable to receive add traffic from one or more appropriate clients of the optical gateway node.

20. The method of Claim 13, wherein the second optical coupler is further operable to:
receive add traffic from one or more clients of the optical gateway node; and
combine the add traffic with the multiplexed forwarded wavelengths and the regenerated wavelengths received from the signal regeneration element such that the combined signal is forwarded on the optical ring.

21. The method of Claim 13, wherein each add/drop node is operable to add and drop traffic independent of the channel spacing of the traffic.

22. The method of Claim 13, wherein the first and second transport elements each comprise a single optical coupler operable to passively add and drop traffic.

23. A method for an in-service upgrade of a twin ring optical network comprising a plurality of passive add/drop nodes coupled using a first optical fiber ring and a second optical fiber ring, the method comprising:
interrupting traffic flow on the first optical fiber ring at a first interruption location between a first passive add/drop node and a second passive add/drop node, the add drop nodes coupled to the optical rings and operable to passively add and drop traffic to and from the optical rings;
interrupting traffic flow on the second optical fiber ring at a second interruption location between the first add/drop node and the second add/drop node, the first and second interruption locations proximate to one another, the network providing protection switching such that interrupting traffic flow at the first or second interruption locations does not prevent traffic on the network from reaching any add/drop node; and
inserting an optical gateway node into the network, the gateway node comprising:
a first transport element associated with the first fiber ring; and
a second transport element associated with the second fiber ring;
wherein the gateway is inserted into the optical ring network such that the first transport element is inserted at the first interruption location and the second transport element is inserted at the second interruption location.

24. The method of Claim 23, further comprising inserting a plurality of optical gateway nodes into the network creates a plurality of subnets, each subnet comprising a plurality of the add/drop nodes, the number of subnets equal to the number of gateways in the network.

25. The method of Claim 24, wherein each gateway node is coupled to the optical rings at a boundary between neighboring subnets and is operable to selectively pass and terminate wavelengths between subnets to allow wavelength reuse in the subnets to provide protection switching.

26. The method of Claim 24, wherein each subnet has a wavelength channel capacity substantially equal to the optical network.

27. The method of Claim 23, wherein the gateway node comprises:
a demultiplexer operable to demultiplex ingress traffic into a plurality of constituent wavelengths;
a switch operable to selectively forward or terminate each wavelength; and
a multiplexer operable to multiplex the forwarded wavelengths;

28. The method of Claim 27, wherein the demultiplexer and the multiplexer comprise array waveguides.

29. The method of Claim 27, wherein the switch comprises a 2x2 switch for each channel, the 2x2 switch operable to selectively add, forward, or drop the channel.

30. The method of Claim 23, wherein the add/drop nodes are operable to transmit substantially the same traffic over each of the first and second optical fiber rings.
